# EUROPEAN PATENT APPLICATION

(11) **EP 3 592 033 A1**
(43) Date of publication of application: **08.01.2020**
(21) Application number: 17901767.8
(22) Date of filing: 21.03.2017
(51) Int. Cl.: H04W 36/00

(54) **COMMUNICATION METHOD AND DEVICE**

(71) Applicant: Huawei Technologies Co., Ltd., Longgang District Shenzhen, Guangdong 518129 (CN)
(72) Inventor: YING, Jiangwei, Shenzhen Guangdong 518129 (CN)
(74) Representative: Isarpatent
(86) International application number: PCT/CN2017/077596
(87) International publication number: WO 2018/170755

(57) **Abstract**

This application discloses a communication method and a communications device, to resolve a problem of how to select an SMF entity for UE. The method includes: determining, by a first SMF entity based on status information, to select an SMF entity for UE; and sending, by the first SMF entity, an indication message to an AMF entity, where the indication message is used to instruct the AMF entity to select an SMF entity for the UE.

## Description

### TECHNICAL FIELD

This application relates to the field of communications technologies, and in particular, to a communication method and a communications device.

### BACKGROUND

With upgrading of mobile communications technologies, many innovative applications are certainly introduced in various industries, and mobile broadband, multimedia, machine type communication (machine type communication, MTC), industrial control, and an intelligent transportation system (intelligent transportation system, ITS) become main use cases in a 5G (5th Generation) era. To meet service requirements that vary widely, a 5G network is flexibly constructed. A potential direction is network function separation. To be specific, a control plane (Control Plane, CP) function and a user plane (User Plane, UP) function are separate, and a mobility management (Mobility Management, MM) function and a session management (Session Management, SM) function in a CP are separate.

In a 5G network slice (Network Slice), a network slicing technology means that a physical network is sliced into a plurality of end-to-end virtual networks. Each virtual network, including a device, an access technology, a transmission path, and a core network in the virtual network, is logically independent. Each network slice is constituted by instantiating a separate network function or a combination of functions, has a different function and feature, and is oriented towards a different requirement and service. Separation of network slices enables different users and user groups to flexibly and dynamically define and customize network capabilities based on different application scenarios and requirements of the users and the user groups, and the network slices do not affect each other.

A network slice generally includes a control plane function (Control Plane Function, CPF) entity and a user plane function (User Plane Function, UPF) entity. The CPF entity mainly implements an access and mobility management function (Access and Mobility management Function, AMF) such as access authentication, security encryption, and location registration of user equipment (User Equipment, UE) and a session management function (Session Management Function, SMF) such as establishment, release, and change of a user plane transmission path. The UPF entity mainly implements functions such as user plane data routing and forwarding.

In a current structure in which the AMF function and the SMF function in the 5G network are separate, how to select an SMF entity for the UE is a problem to be urgently studied and resolved in the industry.

### SUMMARY

This application provides a communication method and a communications device, to resolve a problem of how to select an SMF entity for UE.

According to a first aspect, this application provides a communication method, where the method includes:
determining, by a first SMF entity based on status information, to select an SMF entity for user equipment UE; and
sending, by the first SMF entity, an indication message to an access and mobility management function AMF entity, where the indication message is used to instruct the AMF entity to select an SMF entity for the UE.

It can be learned that in the foregoing manner, when determining to select an SMF entity for the UE, the first SMF entity instructs the AMF entity to select an SMF entity for the UE, thereby resolving a problem of how to select an SMF entity for the UE.

In a possible implementation, after the sending, by the first SMF entity, an indication message to an AMF entity, the method further includes:
receiving, by the first SMF entity, address information that is of a second SMF entity and that is sent by the AMF entity, and sending an identifier of the UE and a PDU session context of the UE to the second SMF entity based on the address information of the second SMF entity, where the second SMF entity is an SMF entity selected by the AMF entity for the UE; or
receiving, by the first SMF entity, a request message sent by the second SMF entity, and sending a response message to the second SMF entity based on the request message, where the response message includes a PDU session context of the UE; or
sending, by the first SMF entity, a PDU session context of the UE to the AMF entity.

It can be learned that in the foregoing manner, the first SMF entity can send, to the second SMF entity selected by the AMF entity, the PDU session context established by the first SMF entity for the UE, so that the PDU session context of the UE can be transferred from the first SMF entity to the second SMF entity, and the second SMF entity does not need to establish a new PDU session for the UE.

In a possible implementation, before the determining, by a first SMF entity based on status information, to select an SMF entity for UE, the method further includes: receiving, by the first SMF entity, a notification message from the AMF entity, where the notification message is used to notify that a handover event or a registration update event occurs on the UE.

It can be learned that in the foregoing manner, in a mobility management process of the UE, when determining that an SMF entity needs to be selected, the first SMF entity instructs the AMF entity, to trigger the AMF entity to select an SMF entity for the UE, thereby overcoming a disadvantage that the AMF entity itself cannot determine whether to select an SMF entity for the UE in the mobility management process of the UE.

In a possible implementation, the notification message is used to notify that the handover event occurs on the UE, and the method further includes: sending, by the first SMF entity, first tunnel information to the second SMF entity, and receiving second tunnel information sent by the second SMF entity, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

It can be learned that in the foregoing manner, when a handover occurs on the UE, a data connection can be established between the first UPF entity and the second UPF entity, so that PDU session continuity of the UE can be ensured after the AMF entity selects the SMF entity for the UE.

In a possible implementation, before the determining, by a first SMF entity based on status information, to select an SMF entity for UE, the method further includes: receiving, by the first SMF entity, a PDU session establishment request message from the AMF entity, where the PDU session establishment request message is used to request to establish a PDU session for the UE.

It can be learned that in the foregoing manner, when the UE for which a PDU session is established on the first SMF entity initiates PDU session establishment again, the first SMF entity instructs the AMF entity when determining that an SMF entity needs to be selected, to trigger the AMF entity to select an SMF entity for the UE, thereby implementing SMF entity selection for the UE in this scenario.

In a possible implementation, the status information includes at least one type of the following: location information of the UE, a serving area of the first SMF entity, load of the first SMF entity, and load of a UPF entity managed by the first SMF entity.

In a possible implementation, the determining, by a first SMF entity based on status information, to select an SMF entity for UE includes:
if a location of the UE falls outside the serving area of the first SMF entity, determining, by the first SMF entity, to select an SMF entity for the UE; or
if the first SMF entity is overloaded, determining, by the first SMF entity, to select an SMF entity for the UE; or
if the UPF entity managed by the first SMF entity is overloaded, determining, by the first SMF entity, to select an SMF entity for the UE; or
if a location of the UE falls outside the serving area of the first SMF entity, and a service and session continuity SCC mode of a PDU session of the UE indicates that the PDU session of the UE requires maintenance of service continuity, determining, by the first SMF entity, to select an SMF entity for the UE.

It can be learned that in the foregoing manner, the first SMF can determine whether an SMF entity needs to be selected for the UE, and further instruct the AMF entity, thereby implementing SMF entity selection for the UE.

According to a second aspect, this application provides a communication method, where the method includes:
receiving, by an access and mobility management function AMF entity, an indication message from a first SMF entity, where the indication message is used to instruct the AMF entity to select an SMF entity for user equipment UE; and
selecting, by the AMF entity, a second SMF entity for the UE based on the indication message.

It may be learned that in the foregoing manner, under instruction of the first SMF entity, the AMF can select an SMF entity for the UE, thereby resolving a problem of how to select an SMF entity for the UE.

In a possible implementation, the method further includes:
sending, by the AMF entity, address information of the second SMF entity to the first SMF entity; or
sending, by the AMF entity, an identifier of the UE and address information of the first SMF entity to the second SMF entity; or
receiving, by the AMF entity, a protocol data unit PDU session context of the UE from the first SMF entity, and sending the PDU session context of the UE to the second SMF entity.

In a possible implementation, before the receiving, by an AMF entity, an indication message from a first SMF entity, the method further includes:
if detecting that a handover event or a registration update event occurs on the UE, sending, by the AMF entity, a notification message to the first SMF entity, where the notification message is used to notify that the handover event or the registration update event occurs on the UE.

In a possible implementation, before the receiving, by an AMF entity, an indication message from a first SMF entity, the method further includes:
receiving, by the AMF entity, a PDU session establishment request message from the UE; and
sending, by the AMF entity, the PDU session establishment request message to the first SMF entity.

In a possible implementation, the selecting, by the AMF entity, a second SMF entity for the UE based on the indication message includes:
selecting, by the AMF entity, the second SMF entity for the UE based on at least one type of location information of the UE, a data network name selected DNN of the UE, session management-network slice selection assistance information S-NSSAI of the UE, subscription information of the UE, a local operator policy, a serving area of a candidate SMF entity, and a load condition of the candidate SMF entity.

For an implementation and a beneficial effect of the method in any one of the second aspect or the implementations of the second aspect in the present invention, refer to an implementation and a beneficial effect of the method in any one of the first aspect or the implementations of the first aspect in the present invention. No repeated description is provided.

According to a third aspect, this application provides a communication method, where the method includes:
obtaining, by a second SMF entity, a protocol data unit PDU session context of user equipment UE on a first SMF entity; and
providing, by the second SMF entity, a PDU session service for the UE based on the PDU session context of the UE.

It can be learned that in the foregoing manner, the PDU session context of the UE can be transferred from the first SMF entity to the second SMF entity, so that the second SMF entity does not need to establish a new PDU session for the UE.

In a possible implementation, the obtaining, by a second SMF entity, a PDU session context of UE on a first SMF entity includes:
receiving, by the second SMF entity, the PDU session context of the UE from the first SMF entity; or
receiving, by the second SMF entity, an identifier of the UE and address information of the first SMF entity that are sent by an access and mobility management function AMF entity, sending a request message to the first SMF entity based on the identifier of the UE and the address information of the first SMF entity, where the request message is used to obtain the PDU session context of the UE, and receiving a response message sent by the first SMF entity, where the response message includes the PDU session context of the UE; or
receiving, by the second SMF entity, the PDU session context of the UE from the AMF entity.

In a possible implementation, the method further includes:
receiving, by the second SMF entity, first tunnel information from the first SMF entity, and sending second tunnel information to the first SMF entity, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

In a possible implementation, the method further includes:
allocating, by the second SMF entity, an Internet IP address to the UE, and sending the IP address to the UE by using session management signaling.

For an implementation and a beneficial effect of the method in any one of the third aspect or the implementations of the third aspect in the present invention, refer to an implementation and a beneficial effect of the method in any one of the first aspect or the implementations of the first aspect in the present invention. No repeated description is provided.

According to a fourth aspect, this application provides a communications apparatus, where the apparatus includes:
a determining module, configured to determine, based on status information, to select an SMF entity for user equipment UE; and
an indication module, configured to send an indication message to an access and mobility management function AMF entity, where the indication message is used to instruct the AMF entity to select an SMF entity for the UE.

In a possible implementation, the apparatus further includes a first transceiver module, configured to:
receive address information that is of a second SMF entity and that is sent by the AMF entity, and send an identifier of the UE and a PDU session context of the UE to the second SMF entity based on the address information of the second SMF entity, where the second SMF entity is an SMF entity selected by the AMF entity for the UE; or
receive a request message sent by the second SMF entity, and send a response message to the second SMF entity based on the request message, where the response message includes a PDU session context of the UE; or
send a PDU session context of the UE to the AMF entity.

In a possible implementation, the apparatus further includes a first receiving module, configured to receive a notification message from the AMF entity, where the notification message is used to notify that a handover event or a registration update event occurs on the UE.

In a possible implementation, the apparatus further includes a second transceiver module, configured to: send first tunnel information to the second SMF entity, and receive second tunnel information sent by the second SMF entity, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

In a possible implementation, the apparatus further includes a second receiving module, configured to receive a PDU session establishment request message from the AMF entity, where the PDU session establishment request message is used to request to establish a PDU session for the UE.

In a possible implementation, the status information includes at least one type of the following: location information of the UE, a serving area of the first SMF entity, load of the first SMF entity, and load of a UPF entity managed by the first SMF entity.

In a possible implementation, the determining module is specifically configured to:
if a location of the UE falls outside the serving area of the first SMF entity, determine to select an SMF entity for the UE; or
if the first SMF entity is overloaded, determine to select an SMF entity for the UE; or
if the UPF entity managed by the first SMF entity is overloaded, determine to select an SMF entity for the UE; or
if a location of the UE falls outside the serving area of the first SMF entity, and a service and session continuity SCC mode of a PDU session of the UE indicates that the PDU session of the UE requires maintenance of service continuity, determine to select an SMF entity for the UE.

For an implementation and a beneficial effect of the apparatus in any one of the fourth aspect or the implementations of the fourth aspect in the present invention, refer to an implementation and a beneficial effect of the method in any one of the first aspect or the implementations of the first aspect in the present invention. No repeated description is provided.

According to a fifth aspect, this application provides a communications apparatus, where the apparatus includes:
a receiving module, configured to receive an indication message from a first SMF entity, where the indication message is used to instruct the AMF entity to select an SMF entity for user equipment UE; and
a selection module, configured to select a second SMF entity for the UE based on the indication message.

In a possible implementation, the apparatus further includes a first transceiver module, configured to:
send address information of the second SMF entity to the first SMF entity; or
send an identifier of the UE and address information of the first SMF entity to the second SMF entity; or
receive a protocol data unit PDU session context of the UE from the first SMF entity, and send the PDU session context of the UE to the second SMF entity.

In a possible implementation, the apparatus further includes a sending module, configured to: if detecting that a handover event or a registration update event occurs on the UE, send a notification message to the first SMF entity, where the notification message is used to notify that the handover event or the registration update event occurs on the UE.

In a possible implementation, the apparatus further includes a second transceiver module, configured to: receive a PDU session establishment request message from the UE; and send the PDU session establishment request message to the first SMF entity.

In a possible implementation, the selection module is specifically configured to select the second SMF entity for the UE based on at least one type of location information of the UE, a data network name selected DNN of the UE, session management-network slice selection assistance information S-NSSAI of the UE, subscription information of the UE, a local operator policy, a serving area of a candidate SMF entity, and a load condition of the candidate SMF entity.

For an implementation and a beneficial effect of the apparatus in any one of the fifth aspect or the implementations of the fifth aspect in the present invention, refer to an implementation and a beneficial effect of the method in any one of the second aspect or the implementations of the second aspect in the present invention. No repeated description is provided.

According to a sixth aspect, this application provides a communications apparatus, where the apparatus includes:
an obtaining module, configured to obtain a protocol data unit PDU session context of user equipment UE on a first SMF entity; and
a service module, configured to provide a PDU session service for the UE based on the PDU session context of the UE.

In a possible implementation, the obtaining module is specifically configured to:
receive the PDU session context of the UE from the first SMF entity; or
receive an identifier of the UE and address information of the first SMF entity that are sent by an access and mobility management function AMF entity, send a request message to the first SMF entity based on the identifier of the UE and the address information of the first SMF entity, where the request message is used to obtain the PDU session context of the UE, and receive a response message sent by the first SMF entity, where the response message includes the PDU session context of the UE; or
receive the PDU session context of the UE from the AMF entity.

In a possible implementation, the apparatus further includes a transceiver module, configured to: receive first tunnel information from the first SMF entity, and send second tunnel information to the first SMF entity, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

In a possible implementation, the apparatus further includes an allocation module, configured to: allocate an Internet IP address to the UE, and send the IP address to the UE by using session management signaling.

For an implementation and a beneficial effect of the apparatus in any one of the sixth aspect or the implementations of the sixth aspect in the present invention, refer to an implementation and a beneficial effect of the method in any one of the third aspect or the implementations of the third aspect in the present invention. No repeated description is provided.

According to a seventh aspect, this application provides a communications device, where a first session management function SMF entity is deployed on the communications device, and the device includes:
a communications interface and a processor, where
the processor is configured to: determine, based on status information, to select an SMF entity for user equipment UE, and send an indication message to an access and mobility management function AMF entity through the communications interface, where the indication message is used to instruct the AMF entity to select an SMF entity for the UE.

In a possible implementation, the processor is further configured to:
receive, through the communications interface, address information that is of a second SMF entity and that is sent by the AMF entity, and send an identifier of the UE and a PDU session context of the UE to the second SMF entity through the communications interface based on the address information of the second SMF entity, where the second SMF entity is an SMF entity selected by the AMF entity for the UE; or
receive, through the communications interface, a request message sent by the second SMF entity, and send a response message to the second SMF entity through the communications interface based on the request message, where the response message includes a PDU session context of the UE; or
send a PDU session context of the UE to the AMF entity through the communications interface.

In a possible implementation, the processor is further configured to:
receive a notification message from the AMF entity through the communications interface, where the notification message is used to notify that a handover event or a registration update event occurs on the UE.

In a possible implementation, the notification message is used to notify that the handover event occurs on the UE, and the processor is further configured to: send first tunnel information to the second SMF entity through the communications interface, and receive, through the communications interface, second tunnel information sent by the second SMF entity, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

In a possible implementation, the processor is further configured to:
receive a PDU session establishment request message from the AMF entity through the communications interface, where the PDU session establishment request message is used to request to establish a PDU session for the UE.

In a possible implementation, the status information includes at least one type of the following: location information of the UE, a serving area of the first SMF entity, load of the first SMF entity, and load of a UPF entity managed by the first SMF entity.

In a possible implementation, the processor is specifically configured to:
if a location of the UE falls outside the serving area of the first SMF entity, determine to select an SMF entity for the UE; or
if the first SMF entity is overloaded, determine to select an SMF entity for the UE; or
if the UPF entity managed by the first SMF entity is overloaded, determine to select an SMF entity for the UE; or
if a location of the UE falls outside the serving area of the first SMF entity, and a service and session continuity SCC mode of a PDU session of the UE indicates that the PDU session of the UE requires maintenance of service continuity, determine to select an SMF entity for the UE.

For an implementation and a beneficial effect of the device in any one of the seventh aspect or the implementations of the seventh aspect in the present invention, refer to an implementation and a beneficial effect of the method in any one of the first aspect or the implementations of the first aspect in the present invention. No repeated description is provided.

According to an eighth aspect, this application provides a communications device, where a mobility management function AMF entity is deployed on the communications device, and the device includes:
a communications interface and a processor, where
the communications interface is configured to receive an indication message from a first SMF entity, where the indication message is used to instruct the AMF entity to select an SMF entity for user equipment UE; and
the processor is configured to select a second SMF entity for the UE based on the indication message.

In a possible implementation, the processor is further configured to:
send address information of the second SMF entity to the first SMF entity through the communications interface; or
send an identifier of the UE and address information of the first SMF entity to the second SMF entity through the communications interface; or
receive a protocol data unit PDU session context of the UE from the first SMF entity through the communications interface, and send the PDU session context of the UE to the second SMF entity through the communications interface.

In a possible implementation, the processor is further configured to:
if detecting that a handover event or a registration update event occurs on the UE, send a notification message to the first SMF entity through the communications interface, where the notification message is used to notify that the handover event or the registration update event occurs on the UE.

In a possible implementation, the processor is further configured to:
receive a PDU session establishment request message from the UE through the communications interface; and
send the PDU session establishment request message to the first SMF entity through the communications interface.

In a possible implementation, the processor is specifically configured to:
select the second SMF entity for the UE based on at least one type of location information of the UE, a data network name selected DNN of the UE, session management-network slice selection assistance information S-NSSAI of the UE, subscription information of the UE, a local operator policy, a serving area of a candidate SMF entity, and a load condition of the candidate SMF entity.

For an implementation and a beneficial effect of the device in any one of the eighth aspect or the implementations of the eighth aspect in the present invention, refer to an implementation and a beneficial effect of the method in any one of the second aspect or the implementations of the second aspect in the present invention. No repeated description is provided.

According to a ninth aspect, this application provides a communications device, where a second session management function SMF entity is deployed on the communications device, and the device includes:
a communications interface and a processor, where
the processor is configured to: obtain a protocol data unit PDU session context of user equipment UE on a first SMF entity through the communications interface, and provide a PDU session service for the UE based on the PDU session context of the UE.

In a possible implementation, the processor is specifically configured to:
receive the PDU session context of the UE from the first SMF entity through the communications interface; or
receive, through the communications interface, an identifier of the UE and address information of the first SMF entity that are sent by an access and mobility management function AMF entity, send a request message to the first SMF entity through the communications interface based on the identifier of the UE and the address information of the first SMF entity, where the request message is used to obtain the PDU session context of the UE, and receive, through the communications interface, a response message sent by the first SMF entity, where the response message includes the PDU session context of the UE; or
receive the PDU session context of the UE from the AMF entity through the communications interface.

In a possible implementation, the processor is further configured to:
receive first tunnel information from the first SMF entity through the communications interface, and send second tunnel information to the first SMF entity through the communications interface, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

In a possible implementation, the processor is further configured to:
allocate an Internet IP address to the UE, and send the IP address to the UE through the transceiver by using session management signaling.

For an implementation and a beneficial effect of the device in any one of the ninth aspect or the implementations of the ninth aspect in the present invention, refer to an implementation and a beneficial effect of the method in any one of the third aspect or the implementations of the third aspect in the present invention. No repeated description is provided.

According to a tenth aspect, this application further provides a computer readable storage medium, configured to store a computer software instruction for executing the function in any one of the first aspect or the possible implementations of the first aspect. The computer software instruction includes a program designed to perform the method in any one of the first aspect or the possible implementations of the first aspect.

According to an eleventh aspect, this application further provides a computer readable storage medium, configured to store a computer software instruction for executing the function in any one of the second aspect or the possible implementations of the second aspect. The computer software instruction includes a program designed to perform the method in any one of the second aspect or the possible implementations of the second aspect.

According to a twelfth aspect, this application further provides a computer readable storage medium, configured to store a computer software instruction for executing the function in any one of the third aspect or the possible implementations of the third aspect. The computer software instruction includes a program designed to perform the method in any one of the third aspect or the possible implementations of the third aspect.

### BRIEF DESCRIPTION OF DRAWINGS

FIG. 1 is a schematic diagram of an architecture of a 5G network according to some embodiments of the present invention;
FIG. 2 is a schematic diagram in which an AMF function and an SMF function in a 5G network are separate according to some embodiments of the present invention;
FIG. 3 is a schematic flowchart of a communication method according to some embodiments of the present invention;
FIG. 4 is a schematic flowchart of a communication method according to some embodiments of the present invention;
FIG. 5 is a schematic flowchart of a communication method according to some embodiments of the present invention;
FIG. 6 is a schematic signaling flowchart of a communication method in actual application according to some embodiments of the present invention;
FIG. 7 is a schematic signaling flowchart of a communication method in actual application according to some embodiments of the present invention;
FIG. 8 is a schematic signaling flowchart of a communication method in actual application according to some embodiments of the present invention;
FIG. 9 is a schematic structural diagram of a communications apparatus according to some embodiments of the present invention;
FIG. 10 is a schematic structural diagram of a communications apparatus according to some embodiments of the present invention;
FIG. 11 is a schematic structural diagram of a communications apparatus according to some embodiments of the present invention;
FIG. 12 is a schematic structural diagram of a communications device according to some embodiments of the present invention;
FIG. 13 is a schematic structural diagram of a communications device according to some embodiments of the present invention; and
FIG. 14 is a schematic structural diagram of a communications device according to some embodiments of the present invention.

### DESCRIPTION OF EMBODIMENTS

The following describes the embodiments of the present invention with reference to the accompanying drawings.

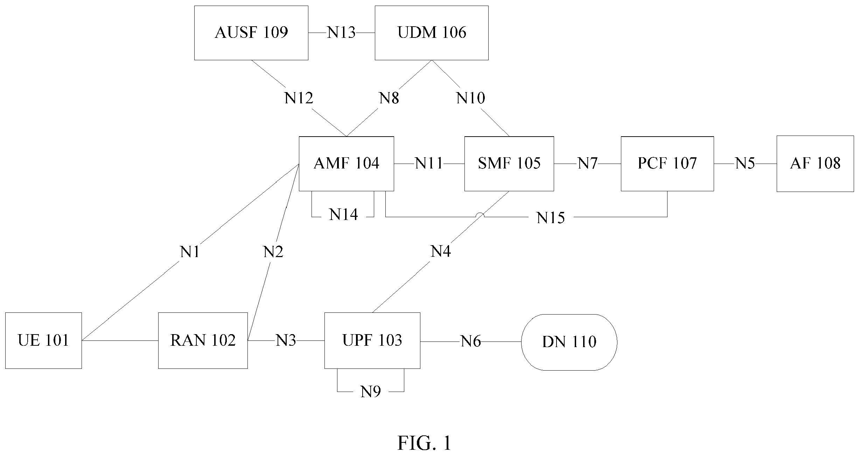

FIG. 1 is a schematic diagram of an architecture of a 5G network according to some embodiments of the present invention.

As shown in FIG. 1, an example architecture 100 of the 5G network includes UE 101, a radio access network (Radio Access Network, RAN) 102, a UPF entity 103, an AMF entity 104, an SMF entity 105, a user data management (User Data Management, UDM) entity 106, a policy and charging function (Policy and Charging Function, PCF) entity 107, an application function (Application Function, AF) entity 108, an authentication server function (Authentication Server Function, AUSF) entity 109, and a data network (Data Network, DN) 110.

In the example architecture of the 5G network shown in FIG. 1, the network elements communicate and interact with each other through corresponding interfaces. The following briefly describes several network elements in this application.

The UE 101 may be a wireless communications device having a wireless communication function, for example without limitation to, a mobile cellular phone, a personal digital assistant (Personal Digital Assistant, PDA), a smartphone, a notebook computer, a tablet computer, a wireless data card, a wireless modulator and demodulator (Modulator demodulator, Modem), or a wearable device such as a smartwatch. With emergence of an Internet of Things (Internet of Things, IoT) technology, more devices that previously have no communication function, for example without limitation to, a household appliance, a transportation tool, a tool device, a service device, and a service facility, start to obtain a wireless communication function by being configured with a wireless communications unit, so as to access a wireless communications network, and accept remote control. This type of devices has the wireless communication function because the wireless communications unit is configured for this type of devices, and therefore this type of devices also belongs to wireless communications devices. In addition, the UE 101 may also be referred to as a mobile station, a mobile device, a mobile terminal, a wireless terminal, a handheld device, a client, or the like.

As shown in FIG. 1, the UE 101 wirelessly accesses a network by using the RAN 102. The RAN 102 may be specifically a network including a plurality of 5G RAN nodes, and is mainly configured to implement a radio physical layer function, a resource scheduling and radio resource management function, a radio access control function, and a mobility management function. Each RAN node may include one or more access points such as a base station and a low power node.

The UPF entity 103 mainly implements a function such as user plane data routing and forwarding, and is responsible for data packet filtering, data transmission/forwarding, rate control, charging information generation, and the like for the UE 101. The UPF entity 103 is connected to the RAN 102 through a user plane interface (N3), and is configured to transmit data of the UE 101. In a PDU session process of the UE 101, the UPF entity 103 may serve as an anchor of a PDU session connection.

The AMF entity 104 is mainly responsible for authentication of the UE 101, mobility management, network slice selection, SMF entity selection, and maintenance and management of status information of the UE 101. The AMF entity 104 is connected to the UE 101 through an interface (N1), and establishes a control plane signaling connection to the RAN 102 through a control plane interface (N2), to implement a function such as radio access bearer control. In the PDU session process of the UE 101, the AMF entity 104 may serve as an anchor of N1 and N2 signaling connections, and routes an N1/N2 session management (Session Management, SM) message to the SMF entity 105.

The SMF entity 105 is mainly responsible for all control plane functions of session management of the UE 101, including UPF entity selection, internet protocol (Internet Protocol, IP) address allocation, session quality of service (Quality of Service, QoS) management, and policy control and charging (Policy Control and Charging, PCC) policy obtaining from the PCF entity 107. The SMF entity 105 is connected to the AMF entity 104 through an interface (N11), is connected to the UPF entity 103 through an interface (N4), is connected to the PCF entity 107 through an interface (N7), and is connected to the UDM entity 106 through an interface (N10).

The PCF entity 107 is mainly configured to provide a policy and charging rule.

It should be understood that the example architecture 100 of the 5G network shown in FIG. 1 is merely used as an example, and is not intended to limit the technical solutions of this application. A person skilled in the art should understand that in a specific implementation process, the 5G network may further include another network element. In addition, a quantity of network elements, entities, or devices may be configured based on a specific requirement.

It should be further understood that although the terms "first", "second", and the like may be used to describe various elements (for example, an SMF entity) in this application, these elements are not limited by these terms, and these terms are merely used to distinguish one element from another. For example, a first SMF entity may be named a second SMF entity, and similarly, the second SMF entity may be named the first SMF entity, without departing from the scope of this application. Both the first SMF entity and the second SMF entity are SMF entities, but the first SMF entity and the second SMF entity are not a same SMF entity.

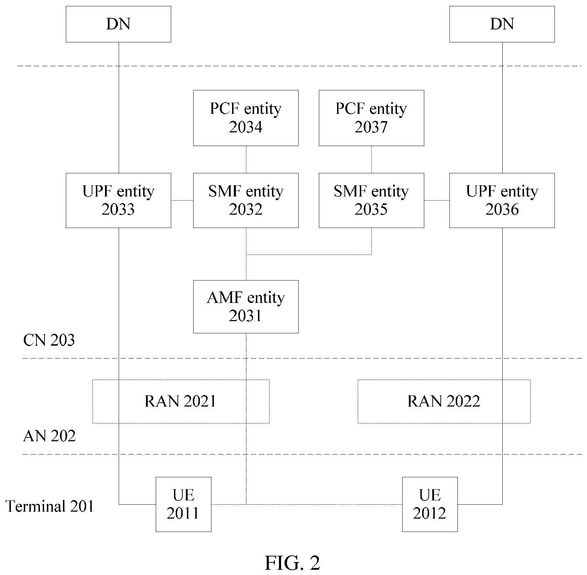

Based on the example shown in FIG. 1, it can be learned that in the 5G network, an AMF function and an SMF function are separate, and an AMF entity selects an SMF entity. For example, FIG. 2 is a schematic diagram in which an AMF function and an SMF function in a 5G network are separate in an actual scenario according to some embodiments of the present invention.

As shown in FIG. 2, at a terminal (Terminal) layer 201, there are UE 2011 and UE 2012; at an access network (Access Network, AN) layer 202, the UE 2011 accesses a network by using a RAN 2021, and the UE 2012 accesses the network by using a RAN 2022; and at a core network (Core Network, CN) layer 203, for both the UE 2011 and the UE 2012, an AMF entity 2031 is responsible for user equipment authentication, mobility management, network slice selection, SMF entity selection, and the like.

The AMF entity 2031 selects an SMF entity 2032 for the UE 2011 to be responsible for all control plane functions of session management. Under management of the SMF entity 2032, a UPF entity 2033 is responsible for a function such as user plane data routing and forwarding, and a PCF entity 2034 provides a policy and charging rule.

The AMF entity 2031 selects an SMF entity 2035 for the UE 2012 to be responsible for all control plane functions of session management. Under management of the SMF entity 2035, a UPF entity 2036 is responsible for a function such as user plane data routing and forwarding, and a PCF entity 2037 provides a policy and charging rule.

A current standard defines that in a PDU session establishment procedure (PDU session establishment procedure), an AMF entity selects an appropriate SMF entity for UE based on the following information:
a selected data network name (Selected Data Network Name, DNN) of the UE;
session management-network slice selection assistance information (S-NSSAI) of the UE;
subscription information (Subscription information) of the UE;
a local operator policy (Local operator policies); and
a load condition of a candidate SMF (Load conditions of the candidate SMFs).

In the PDU session establishment procedure, a new PDU session is established. After the PDU session is established, if a current SMF entity cannot be responsible for session management of the UE because an event such as a handover (Handover) occurs, and consequently the UE is located outside a serving area of the current SMF entity, how to select an SMF entity for the UE and how to transfer the established PDU session from the current SMF entity to a target SMF entity to avoid requiring establishment of a new PDU session for the UE again are not included in the current standard.

To resolve a problem of how to select an SMF entity for UE, the embodiments of the present invention provide a communication solution. In the communication solution provided in the embodiments of the present invention, under instruction of an SMF entity, an AMF entity can select an SMF entity, thereby resolving the problem of how to select an SMF entity for UE.

It should be noted that, selecting an SMF entity for UE described in this application may be selecting a new SMF entity for the UE and releasing a current SMF entity, or may be selecting a new SMF entity for the UE without releasing a current SMF entity.

For ease of distinction, in the following, a "first SMF entity" represents an SMF entity that instructs an SMF entity to select an SMF entity, and a "second SMF entity" represents an SMF entity selected by the AMF entity.

Specifically, in a communication solution provided in some embodiments of the present invention, if the first SMF entity determines, based on status information, that an SMF entity needs to be selected for UE, the first SMF entity sends an indication message to the AMF entity, to instruct the AMF entity to select an SMF entity for the UE. It can be learned that in the foregoing manner, when determining to select an SMF entity for the UE, the first SMF entity instructs the AMF entity to select an SMF entity for the UE, thereby implementing SMF entity selection for the UE.

Correspondingly, in some embodiments of the present invention, if the AMF entity receives the indication message from the first SMF entity that is used to instruct the AMF entity to select an SMF entity for the UE, the AMF entity selects the second SMF entity for the UE based on the indication message. It can be learned that in the foregoing manner, the AMF entity can select an SMF entity based on an instruction from the first SMF entity, thereby implementing SMF entity selection for the UE.

Correspondingly, in some embodiments of the present invention, the second SMF entity selected by the AMF entity may obtain a PDU session context of the UE on the first SMF entity, and may further provide a PDU session service for the UE based on the PDU session context of the UE. It can be learned that in the foregoing manner, an established PDU session can be transferred from the first SMF entity to the second SMF entity, to avoid requiring establishment of a new PDU session on the second SMF for the UE.

The UE 2011 in the scenario shown in FIG. 2 is used as an example. It is assumed that the AMF entity 2031 initially selects the SMF entity 2032 (equivalent to the first SMF entity) to be responsible for all the control plane functions of the session management of the UE 2011. In the communication solution provided in the embodiments of the present invention, if the SMF entity 2032 determines, based on current status information, that an SMF entity needs to be selected for the UE 2011, for example, when the SMF entity 2032 determines, based on the current status information, that a session service no longer can be provided for the UE, the SMF entity 2032 may instruct the AMF entity 2031 to select a new SMF entity for the UE 2011. Assuming that after receiving an instruction, the AMF entity 2031 selects the SMF entity 2035 (equivalent to the second SMF entity) to be responsible for all the control plane functions of the session management of the UE 2011, the SMF entity 2035 may provide a session service for the UE 2011 by obtaining an existing PDU session context of the UE 2011 on the SMF entity 2032.

It can be learned that in the foregoing process, SMF entity selection is implemented for the UE, and a disadvantage that an SMF entity cannot be selected for the UE because the AMF entity cannot determine whether to select an SMF entity for the UE is overcome. In addition, when there is an established PDU session of the UE 2011 on the SMF entity 2032, the SMF entity 2035 can obtain the existing PDU session context of the UE 2011 on the SMF entity 2032, and therefore does not need to provide a session service for the UE 2011 by performing a PDU session establishment procedure again.

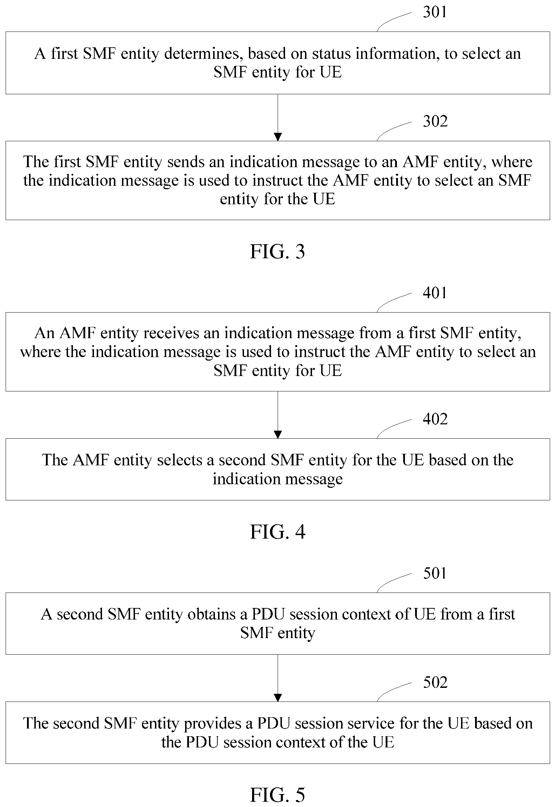

FIG. 3 is a schematic flowchart of a communication method according to some embodiments of the present invention.

A procedure shown in FIG. 3 may be performed by a first SMF entity. For example, function modules configured to perform the procedure shown in FIG. 3 may be configured on the SMF entity 2032 or the SMF entity 2035 shown in FIG. 2. These function modules may be specifically implemented by hardware, software programming, or a combination of software and hardware.

As shown in FIG. 3, the procedure includes the following steps.

Step 301: The first SMF entity determines, based on status information, to select an SMF entity for UE.

Step 302: The first SMF entity sends an indication message to an AMF entity, where the indication message is used to instruct the AMF entity to select an SMF entity for the UE.

Optionally, the status information in step 301 may include at least one type of the following: location information of the UE, a serving area of the first SMF entity, load of the first SMF entity, and load of a UPF entity managed by the first SMF entity.

Specifically, the location information of the UE may be tracking area (Tracking Area, TA) information of the UE, a cell identity (cell ID) of the UE, or the like.

In addition, in consideration of the fact that a service and session continuity mode (Service and Session Continuity mode, SCC mode) of a PDU session of the UE requires that whether service continuity needs to be maintained for the PDU session of the UE, optionally, the status information in step 301 may further include the SCC mode of the PDU session of the UE.

The SSC mode is determined when the first SMF entity establishes the PDU session for the UE.

Optionally, a case in which the first SMF entity determines, based on the status information, to select an SMF entity for the UE may include, but is not limited to, the following:
If the first SMF entity determines, based on the status information, for example, specifically based on the location information of the UE and the serving area of the first SMF entity, that a location of the UE falls outside the serving area of the first SMF entity, the first SMF entity may determine to select an SMF entity for the UE.

If the first SMF entity determines, based on the status information, for example, specifically based on the load of the first SMF entity, that the first SMF entity is overloaded, the first SMF entity may determine to select an SMF entity for the UE.

If the first SMF entity determines, based on the status information, for example, specifically based on the load of the UPF entity managed by the first SMF entity, that the UPF entity managed by the first SMF entity is overloaded, the first SMF entity may determine to select an SMF entity for the UE.

If the first SMF entity determines, based on the status information, for example, specifically based on the location information of the UE, the serving area of the first SMF entity, and the SCC mode of the PDU session of the UE, that a location of the UE falls outside the serving area of the first SMF entity and the SCC mode of the PDU session of the UE indicates that the PDU session of the UE requires maintenance of service continuity, the first SMF entity may determine to select the SMF entity for the UE.

In addition, in an implementation scenario of the procedure shown in FIG. 3, if a PDU session corresponding to a PDU identifier (Identification, ID) of the UE does not require service continuity (for example, an SSC mode 2), the first SMF entity may determine that no SMF entity needs to be selected for the UE.

It should be understood that only some specific example cases in which the first SMF entity is triggered to determine to select an SMF entity for the UE are described above. In actual application, the first SMF entity may alternatively determine, by using other status information or a combination of status information, whether to select an SMF entity for the UE. Examples are not listed one by one herein in this application.

It can be learned that in the procedure shown in FIG. 3, the first SMF entity can determine, based on the status information, whether to select an SMF entity for the UE, and instruct the AMF entity to select an SMF entity for the UE when determining to select an SMF entity for the UE, so that the AMF entity can be triggered to select an SMF entity for the UE again, thereby resolving a problem of how to select an SMF entity for the UE.

Further, in consideration of some mobility management (Mobility Management, MM) and session management (Session Management, SM) procedures such as a handover (Handover), a registration update procedure (registration update procedure), and a service request procedure (service request procedure) of the UE, an SMF entity may need to be selected for the UE. Therefore, in an implementation scenario of the procedure shown in FIG. 3, before the first SMF entity performs step 301, the method may further include: receiving, from the AMF entity, a notification message used to notify that a handover event or a registration update event occurs on the UE.

Optionally, the notification message may be sent by the AMF entity to the first SMF entity when detecting that the handover event or the registration update event occurs on the UE.

Specifically, the notification message may carry information such as the location information of the UE and an identifier (UE ID) of the UE.

For example, in an implementation scenario of the procedure shown in FIG. 3, if a handover (Handover) occurs on the UE, for example, a handover between base stations, including a change of an Xn interface between the UE and a base station and a change of an N2 interface between a base station and the AMF, occurs on the UE, an active (active) PDU session is processed, and therefore an SMF entity may need to be selected for the UE. After detecting the handover event, the AMF entity sends the notification message to the first SMF entity. Being triggered by the notification message, the first SMF entity performs the procedure shown in FIG. 3, and instructs the AMF entity to select an SMF entity for the UE when determining to select an SMF entity for the UE, thereby implementing SMF entity selection for the UE.

Similarly, in another implementation scenario of the procedure shown in FIG. 3, if a registration update procedure (registration update procedure) occurs on the UE, for example, when a periodic registration update procedure or a registration update procedure caused by mobility occurs on the UE, an inactive (inactive) PDU session is processed, and therefore an SMF entity may need to be selected for the UE. After detecting the registration update event, the AMF entity sends the notification message to the first SMF entity. Being triggered by the notification message, the first SMF entity may also perform the procedure shown in FIG. 3, and instruct the AMF entity to select an SMF entity for the UE when determining to select an SMF entity for the UE, thereby implementing SMF entity selection for the UE.

In addition, in another implementation scenario of the procedure shown in FIG. 3, if a service request procedure (Service request procedure) occurs on the UE, the procedure causes the UE to change from an idle (idle) mode to a connected (connected) mode, and some PDU sessions of the UE may be activated, and therefore an SMF entity may also need to be selected for the UE. After detecting the service request event, the AMF entity may also send the notification message to the first SMF entity. Being triggered by the notification message, the first SMF entity may also perform the procedure shown in FIG. 3, and instruct the AMF entity to select an SMF entity for the UE when determining to select an SMF entity for the UE, thereby implementing SMF entity selection for the UE.

It can be learned that in the foregoing manner, in a mobility management process of the UE, the first SMF entity instructs the AMF entity to select an SMF entity for the UE, thereby resolving a problem of how to select an SMF entity for the UE, and overcoming a current disadvantage that in a mobility management process of UE, an AMF entity itself cannot select an SMF entity for the UE.

In addition, in consideration of the fact that the UE for which the PDU session is established on the first SMF entity may request again to establish a PDU session, an SMF entity may also need to be selected for the UE. Optionally, in an implementation scenario of the procedure shown in FIG. 3, before the first SMF entity performs step 301, the method may further include: receiving, from the AMF entity, a PDU session establishment request message used to request to establish a PDU session for the UE.

For example, in an implementation scenario of the procedure shown in FIG. 3, if the AMF entity receives the PDU session establishment request message from the UE, the AMF entity may send the PDU session establishment request message to the first SMF entity. Because there is the established PDU session of the UE on the first SMF entity, the PDU session of the UE is processed, and therefore an SMF entity may need to be selected for the UE. Further, being triggered by the PDU session establishment request message, the first SMF entity may perform the procedure shown in FIG. 3, and instruct the AMF entity to select an SMF entity for the UE when determining to select an SMF entity for the UE.

It can be learned that in the foregoing embodiments of the present invention, by performing step 301, the first SMF entity can determine, based on the status information, whether to select an SMF entity for the UE, and send, to the AMF entity by performing step 302, the indication message used to instruct the AMF entity to select an SMF entity for the UE when determining to select an SMF entity for the UE, so that the AMF entity selects an SMF entity for the UE, thereby implementing SMF entity selection for the UE.

Optionally, the indication message may directly carry indication information used to instruct the AMF entity to select an SMF entity for the UE, for example, carry SMF entity selection indication (SMF selection indication) information. Optionally, a specific N11 interface message such as an SMF selection request may be alternatively defined, to implicitly instruct the AMF entity to select an SMF entity for the UE.

Further, to transfer an existing PDU session context (PDU session contexts) of the UE on the first SMF entity from the first SMF entity to a second SMF entity when the SMF entity selection is implemented for the UE, so that the second SMF entity does not need to establish a new PDU session for the UE, in an implementation scenario of the procedure shown in FIG. 3, after sending the indication message to the AMF entity, the first SMF entity may further perform the following steps:
The first SMF entity receives address information that is of the second SMF entity and that is sent by the AMF entity, and sends the identifier of the UE and the PDU session context of the UE to the second SMF entity based on the address information of the second SMF entity, where the second SMF entity is an SMF entity selected by the AMF entity for the UE.

Optionally, the address information of the second SMF entity may be notified to the first SMF entity after the AMF entity selects the second SMF entity for the UE.

Optionally, the address information of the second SMF entity may be specifically, for example, an identifier (SMF ID) of the second SMF entity, or may be, for example, an IP address of the second SMF entity.

In another implementation scenario of the procedure shown in FIG. 3, after sending the indication message to the AMF entity, the first SMF entity may alternatively transfer the PDU session context of the UE to the second SMF entity by performing the following steps:
The first SMF entity receives a request message sent by the second SMF entity, where the request message is used to obtain the PDU session context of the UE, and further, the first SMF entity may send a response message to the second SMF entity based on the request message, where the response message carries the PDU session context of the UE.

Optionally, after selecting the second SMF entity for the UE, the AMF entity may send the identifier of the UE and address information of the first SMF entity to the second SMF entity, so that the second SMF entity can send the request message to the first SMF entity based on the received identifier of the UE and the received address information of the first SMF entity, to obtain the PDU session context of the UE.

Optionally, the address information of the first SMF entity may be specifically, for example, an identifier (SMF ID) of the first SMF entity, or may be, for example, an IP address of the first SMF entity.

In another implementation scenario of the procedure shown in FIG. 3, after sending the indication message to the AMF entity, the first SMF entity may alternatively transfer the PDU session context of the UE to the second SMF entity by performing the following steps:
The first SMF entity sends the PDU session context of the UE to the AMF entity, and further, the AMF entity may send the PDU session context of the UE to the second SMF entity.

Optionally, after obtaining the PDU session context of the UE on the first SMF entity in any one of the foregoing manners, the second SMF entity may provide a PDU session service for the UE based on the PDU session context of the UE.

It can be learned that in the foregoing manner, an existing PDU session (in an active state (active state) and/or an inactive state (inactive state)) of the UE on the first SMF entity can be transferred to the second SMF entity, to avoid a redundant procedure for establishing a new PDU session for the UE.

Optionally, in an implementation scenario of the procedure shown in FIG. 3, after determining that the PDU session context of the UE is transferred to the second SMF entity, the first SMF entity may delete the PDU session context of the UE that is stored on the first SMF entity, and instruct a first UPF entity that is managed by the first SMF entity and that provides a PDU session service for the UE to delete the PDU session context of the UE.

Optionally, if an SMF entity needs to be selected for the UE because the handover event occurs on the UE, to ensure PDU session continuity of the UE, in an implementation scenario of the procedure shown in FIG. 3, if the first SMF entity receives the notification message that is sent by the AMF entity and that is used to notify that the handover event occurs on the UE, after instructing, by performing the procedure shown in FIG. 3, the AMF entity to select an SMF entity for the UE and transferring the PDU session context of the UE to the second SMF entity, the first SMF entity may not delete the PDU session context of the UE that is stored on the first SMF entity, or may instruct the first UPF entity that is managed by the first SMF entity and that provides a PDU session service for the UE to delete the PDU session context of the UE.

In addition, to ensure the PDU session continuity of the UE when the handover event occurs on the UE, in an implementation scenario of the procedure shown in FIG. 3, if the first SMF entity receives the notification message that is sent by the AMF entity and that is used to notify that the handover event occurs on the UE, after instructing, by performing the procedure shown in FIG. 3, the AMF entity to select an SMF entity for the UE, the first SMF entity may further send first tunnel information to the second SMF entity, and may receive second tunnel information from the second SMF entity.

Specifically, the first tunnel information and the second tunnel information are used to establish a data connection between the first UPF entity and a second UPF entity for the UE. The second UPF entity is a UPF entity that is managed by the second SMF entity and that provides a PDU session service for the UE.

Optionally, the first tunnel information and the second tunnel information may specifically include tunnel identification information used to establish data transmission between the first UPF entity and the second UPF entity. For example, the tunnel identification information may be a tunnel endpoint identifier (Tunnel Endpoint Identifier, TEID).

Further, in an implementation scenario of the procedure shown in FIG. 3, after receiving the first tunnel information, the second SMF entity may configure the first tunnel information on the second UPF entity, and maintain the first tunnel information. Correspondingly, after receiving the second tunnel information, the first SMF entity may configure the second tunnel information on the first UPF entity, and maintain the second tunnel information. Therefore, a data connection is established between the first UPF entity and the second UPF entity, to ensure the PDU session continuity of the UE when the SMF entity selection is implemented for the UE.

In addition, in actual application, there may be no communications interface that directly connects the first SMF entity and the second SMF entity. In this case, in an implementation scenario of the procedure shown in FIG. 3, if there is no direct communications interface between the first SMF entity and the second SMF entity, a signaling message exchanged between the first SMF entity and the second SMF entity may be forwarded by using an intermediate device, for example, may be routed and forwarded by the AMF entity. In consideration of the fact that a person skilled in the art should easily understand a routing and forwarding procedure, details are not described in this application.

Based on a same technical concept, FIG. 4 is a schematic flowchart of a communication method according to some embodiments of the present invention.

A procedure shown in FIG. 4 may be performed by an AMF entity. For example, function modules configured to perform the procedure shown in FIG. 4 may be configured on the AMF entity 2031 shown in FIG. 2. These function modules may be specifically implemented by hardware, software programming, or a combination of software and hardware.

As shown in FIG. 4, the procedure includes the following steps.

Step 401: The AMF entity receives an indication message from a first SMF entity, where the indication message is used to instruct the AMF entity to select an SMF entity for UE.

Step 402: The AMF entity selects a second SMF entity for the UE based on the indication message.

Optionally, in an implementation scenario of the procedure shown in FIG. 4, a specific manner in which the AMF entity selects the second SMF entity for the UE based on the received indication message in step 402 may be as follows: The AMF entity selects the second SMF entity for the UE based on at least one type of location information of the UE, a data network name selected DNN of the UE, session management-network slice selection assistance information S-NSSAI of the UE, subscription information of the UE, a local operator policy, a serving area of a candidate SMF entity, and a load condition of the candidate SMF entity.

For example, a process in which the AMF entity selects the SMF may be as follows: First, the UE sends a session establishment request that carries a DNN, where the subscription information of the UE includes an authorized DNN, and the AMF selects, based on the authorized DNN of the UE, the DNN sent by the UE, and SMFs that support the DNN, SMFs that meet a condition. Then, because the session establishment request sent by the UE carries S-NSSAI, the AMF selects the SMF based on the S-NSSAI in the request from the UE and S-NSSAI supported by the SMFs, where each SMF has corresponding S-NSSAI. Alternatively, it may be understood that the foregoing selection process is a process of obtaining an intersection set after the AMF entity considers a plurality of factors.

It should be understood that only some parameter examples based on which the AMF entity selects the second SMF entity for the UE are described above. In actual application, the AMF entity may alternatively determine, by using another parameter or a combination of parameter information, whether to select an SMF entity for the UE. Examples are not listed one by one herein in this application.

Corresponding to the foregoing description of the procedure shown in FIG. 3 and the possible implementation scenario of the procedure in this application, in an implementation scenario of the procedure shown in FIG. 4, after selecting the second SMF entity for the UE based on the indication message, the AMF entity may further perform the following steps:
The AMF entity sends address information of the second SMF entity to the first SMF entity; or
the AMF entity sends an identifier of the UE and address information of the first SMF entity to the second SMF entity; or
the AMF entity receives a PDU session context of the UE from the first SMF entity, and sends the PDU session context of the UE to the second SMF entity.

Optionally, in an implementation scenario of the procedure shown in FIG. 4, before the AMF entity receives the indication message from the first SMF entity, the method may further include: if detecting that a handover event or a registration update event occurs on the UE, sending, by the AMF entity to the first SMF entity, a notification message used to notify that the handover event or the registration update event occurs on the UE.

Optionally, in an implementation scenario of the procedure shown in FIG. 4, before the AMF entity receives the indication message from the first SMF entity, the method may further include: receiving, by the AMF entity, a PDU session establishment request message from the UE; and sending the PDU session establishment request message to the first SMF entity.

Optionally, in an implementation scenario of the procedure shown in FIG. 4, if there is no direct communications interface between the first SMF entity and the second SMF entity, a signaling message exchanged between the first SMF entity and the second SMF entity may be routed and forwarded by the AMF entity.

Specifically, the procedure shown in FIG. 4 and the possible implementation scenarios of the procedure are corresponding to the procedure shown in FIG. 3 and the possible implementation scenarios of the procedure in this application. Therefore, for specific implementations and beneficial effects of the procedure shown in FIG. 4 and the possible implementation scenarios of the procedure, refer to related description of the procedure shown in FIG. 3 and the possible implementation scenarios of the procedure in this application. Details are not described herein again in this application.

FIG. 5 is a schematic flowchart of a communication method according to some embodiments of the present invention.

A procedure shown in FIG. 5 may be performed by a first SMF entity. For example, function modules configured to perform the procedure shown in FIG. 5 may be configured on the SMF entity 3032 or the SMF entity 3035 shown in FIG. 2. These function modules may be specifically implemented by hardware, software programming, or a combination of software and hardware.

As shown in FIG. 5, the procedure includes the following steps.

Step 501: A second SMF entity obtains a protocol data unit PDU session context of UE on the first SMF entity.

Step 502: The second SMF entity provides a PDU session service for the UE based on the PDU session context of the UE.

Optionally, in an implementation scenario of the procedure shown in FIG. 5, after obtaining the PDU session context of the UE on the first SMF entity, the second SMF entity may update the PDU session context of the UE, for example, may select a user data plane UPF entity for the UE from UPF entities managed by the second SMF entity, allocate a new IP address to the UE, and allocate information about a tunnel connected to N3 between the selected UPF entity and a RAN.

Further, in an implementation scenario of the procedure shown in FIG. 5, after updating the obtained PDU session context of the UE, the second SMF entity may configure, based on an updated PDU session context, related parameter information (for example, TFTs) on a second UPF entity that is managed by the second SMF entity and that provides a session service for the UE.

Specifically, after the corresponding related information for a PDU session of the UE is configured on the second UPF entity, functions such as data packet filtering, data transmission/forwarding, rate control, and charging information generation may be provided for the PDU session.

Optionally, if the first SMF entity instructs an AMF entity to select the second SMF entity to provide a session management function for the UE because a registration update event, a service request event, or a handover event occurs on the UE, the first SMF entity may delete the PDU session context of the UE, and therefore a new IP address may need to be allocated to the UE. In an implementation scenario of the procedure shown in FIG. 5, after obtaining the PDU session context of the UE on the first SMF entity, the second SMF entity may further perform the following steps:
The second SMF entity allocates an IP address to the UE, and sends the IP address to the UE by using session management signaling or a DHCP (dynamic host configuration protocol, dynamic host configuration protocol).

Optionally, corresponding to the foregoing description of the procedure shown in FIG. 3 and the possible implementation scenario of the procedure in this application, in an implementation scenario of the procedure shown in FIG. 5, the second SMF entity may specifically obtain the PDU session context of the UE on the first SMF entity in the following manners:
The second SMF entity receives the PDU session context of the UE from the first SMF entity; or
the second SMF entity receives an identifier of the UE and address information of the first SMF entity that are sent by the AMF entity, sends a request message to the first SMF entity based on the identifier of the UE and the address information of the first SMF entity, where the request message is used to obtain the PDU session context of the UE, and receives a response message sent by the first SMF entity, where the response message includes the PDU session context of the UE; or
the second SMF entity receives the PDU session context of the UE from the AMF entity.

Corresponding to the foregoing description of the procedure shown in FIG. 3 and the possible implementation scenario of the procedure in this application, in an implementation scenario of the procedure shown in FIG. 5, to ensure PDU session continuity of the UE when the handover event occurs on the UE, the second SMF entity may further receive first tunnel information from the first SMF entity, and send second tunnel information to the first SMF entity, to establish a data connection between a first UPF entity and the second UPF entity.

Specifically, the procedure shown in FIG. 5 and the possible implementation scenarios of the procedure are corresponding to the procedure shown in FIG. 3 and the possible implementation scenarios of the procedure in this application. Therefore, for specific implementations and beneficial effects of the procedure shown in FIG. 5 and the possible implementation scenarios of the procedure, refer to related description of the procedure shown in FIG. 3 and the possible implementation scenarios of the procedure in this application. Details are not described herein again in this application.

In conclusion, in the foregoing embodiments of the present invention, when determining to select an SMF entity for the UE, the first SMF entity instructs the AMF entity to select an SMF entity for the UE, thereby resolving a problem of how to select an SMF entity for the UE.

In some embodiments of the present invention, the first SMF entity can further send, to the second SMF entity selected by the AMF entity, the PDU session context established by the first SMF entity for the UE, so that the PDU session context of the UE can be transferred from the first SMF entity to the second SMF entity, and the second SMF entity does not need to establish a new PDU session for the UE.

In some embodiments of the present invention, in a mobility management process of the UE, when determining that an SMF entity needs to be selected, the first SMF entity instructs the AMF entity, to trigger the AMF entity to select an SMF entity for the UE, thereby overcoming a disadvantage that the AMF entity itself cannot determine whether to select an SMF entity for the UE in the mobility management process of the UE.

Particularly, in some embodiments of the present invention, when a handover occurs on the UE, a data connection can be established between the first UPF entity and the second UPF entity, so that the PDU session continuity of the UE can be still ensured after the AMF entity selects the SMF entity for the UE.

In some embodiments of the present invention, when the UE for which the PDU session is established on the first SMF entity initiates PDU session establishment again, the first SMF entity instructs the AMF entity when determining that an SMF entity needs to be selected, to trigger the AMF entity to select an SMF entity for the UE, thereby implementing SMF entity selection for the UE in this scenario.

To describe the communication solution provided in the foregoing embodiments of this application more clearly, the following describes in detail the communication solution provided in the foregoing embodiments of the present invention with reference to a specific signaling procedure in an actual scenario. In addition, for the sake of simplified description, in the following, a "source SMF (Source SMF) entity" is used to represent the "first SMF entity", a "target SMF (Target SMF) entity" is used to represent the "second SMF entity", a "source UPF (Source UPF) entity" is used to represent the "first UPF entity", and a "target UPF (Target UPF) entity" is used to represent the "second UPF entity".

In some embodiments of the present invention, the source SMF entity determines, based on status information, to select an SMF entity for UE, and sends an indication message to an AMF entity, and after receiving the indication message, the AMF entity selects the target SMF entity for the UE, and then may notify the source SMF entity of address information of the selected target SMF entity, so that the source SMF entity may transfer a PDU session context of the UE to the target SMF entity based on the address information of the target SMF entity.

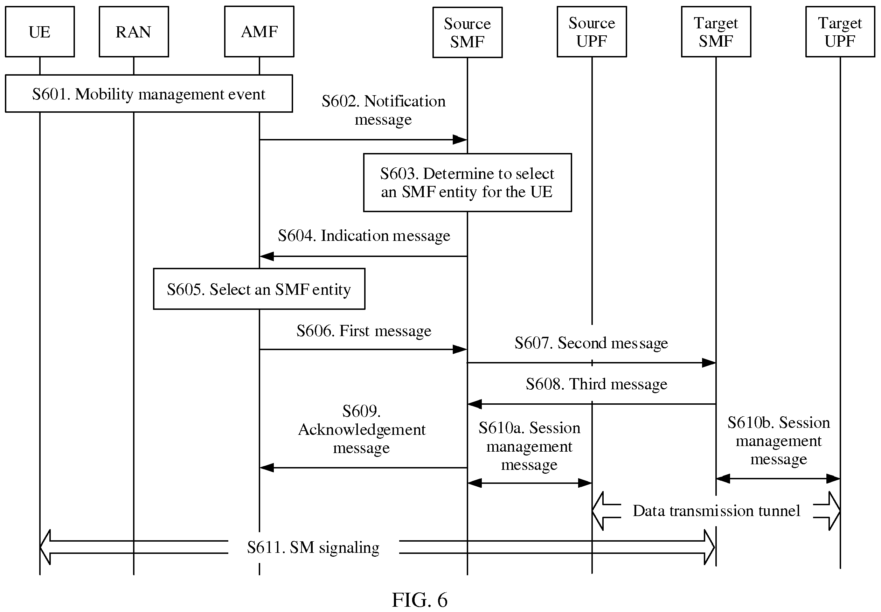

FIG. 6 is a schematic signaling flowchart of a communication method in actual application according to some embodiments of the present invention.

S601. A signaling procedure of a mobility management event (MM event) occurs between UE, an access network (RAN), and an AMF entity.

The mobility management event may include a registration update registration update procedure, a handover handover procedure, a service request service request procedure, or the like.

For example, if the handover procedure occurs, the AMF entity receives a path switching (path switch) message or a handover request (handover required) message from the UE and the RAN.

If the registration update procedure occurs, the AMF entity receives a registration update request (Registration update request) message from the UE and the RAN.

If the service request procedure occurs on the UE, the AMF entity receives a service request (service request) message from the UE and the RAN.

S602. The AMF entity sends a notification message to a source SMF entity.

The notification message is a notification message used to notify the mobility management event (for example, the notification message is a UE MM event notification).

In an example, the AMF entity notifies an SMF entity (the source SMF entity) of the mobility management event (for example, the handover procedure, the registration update procedure, or the service request procedure).

Specifically, the AMF entity may store a mapping (mapping) relationship between a PDU session identifier (PDU session ID) and an identifier (SMF ID) of an SMF entity. The AMF entity may send the notification message to the source SMF entity according to the mapping relationship.

Optionally, the notification message may carry location information (UE location) of the UE.

Optionally, the notification message may further carry a UE ID.

S603. The source SMF entity determines to select an SMF entity for the UE.

In an example, after receiving a notification from the AMF entity, the source SMF entity determines, based on at least one type of the location information (UE location) of the UE, a serving area (SMF serving area) of the source SMF entity, information about whether the source SMF entity is overloaded (SMF overload), and information about whether a UPF entity managed by the source SMF entity is overloaded (UPF overload), whether to select an SMF entity for the UE.

Optionally, if the source SMF is overloaded, the source SMF entity determines that the source SMF entity cannot serve the UE, and may determine that an SMF entity needs to be selected for the UE.

Optionally, if determining, based on the SMF serving area and the UE location, that the UE location falls outside the serving area of the source SMF, the source SMF entity may determine that an SMF entity needs to be selected for the UE.

Optionally, if determining, based on the SMF serving area and the UPF overload, that the UE location falls outside serving areas of all UPFs managed by the source SMF, the source SMF entity may determine that an SMF entity needs to be selected for the UE.

Optionally, further, the source SMF entity may determine, with reference to information about an SSC mode, whether to select an SMF entity for the UE. The SSC mode is determined when a PDU session is established.

For example, if a PDU session corresponding to a PDU ID of the UE does not require service continuity, for example, an SSC mode 2, the source SMF entity may determine that no SMF entity needs to be selected for the UE and a new PDU session may be established. If the PDU session corresponding to the PDU ID of the UE requires service continuity, for example, an SSC mode 1, the source SMF entity may determine, with reference to the foregoing factors, whether an SMF entity needs to be selected for the UE.

S604. The source SMF entity sends an indication message to the AMF entity.

The indication message is used to instruct the AMF entity to select an SMF entity.

Optionally, the AMF entity may determine, based on the indication message, that an SMF entity needs to be selected. Alternatively, the indication message may carry SMF selection indication (SMF indication selection indication) information.

Optionally, the indication message may be specifically in a form of an SMF relocation request.

S605. The AMF entity selects a target SMF entity for the UE after receiving the indication message from the SMF.

S606. The AMF entity sends a first message to the source SMF entity after selecting the target SMF entity.

The first message may carry address information of the target SMF entity.

Optionally, the first message may be specifically in a form of an SMF relocation response (SMF relocation response).

S607. The source SMF entity sends PDU session contexts of the UE to the target SMF entity based on address information of the target SMF entity after receiving the first message.

As shown in FIG. 6, the source SMF entity sends a second message to the target SMF entity.

The second message may carry the PDU session contexts (PDU session contexts) of the UE and the UE ID.

Optionally, the second message may further carry address information (AMF address) of the AMF entity.

Optionally, the second message may be specifically in a form of a session context transfer request (Session context transfer request).

S608. The target SMF entity returns a third message to the source SMF entity after receiving a second message.

The third message may be used to confirm that the PDU session contexts of the UE are obtained.

Optionally, the third message may be specifically in a form of a session context transfer response.

Optionally, for S607 and S608, if a handover occurs on the UE, the source SMF entity and the target SMF entity further need to exchange a tunnel parameter used to establish a data channel between a source UPF entity and a target UPF entity.

Optionally, the source SMF entity may generate first tunnel information used to establish the data channel between the source UPF entity and the target UPF entity, and send the first tunnel information when sending the PDU session contexts of the UE to the target SMF entity. In other words, the second message may further carry the first tunnel information.

Optionally, after receiving the second message, the target SMF entity may generate second tunnel information used to establish the data channel between the source UPF entity and the target UPF entity, and may add the second tunnel information to the third message sent to the source SMF entity.

S609. The source SMF entity feeds back an acknowledgement message to the AMF entity after receiving the third message sent by the target SMF entity.

It should be noted that step S609 is optional.

Optionally, the acknowledgement message may be specifically in a form of an SMF relocation response acknowledgement (SMF relocation response Ack).

S610a. The source SMF entity and a source UPF entity exchange a session management message through an N4 interface.

Specifically, the source SMF entity may delete the PDU session contexts of the UE from the source UPF (equivalent to a first UPF entity), and also delete the PDU session contexts of the UE stored on the source SMF entity.

Optionally, if the handover procedure occurs on the UE, and the PDU session requires service continuity, as described in the foregoing embodiment of this application, the source SMF entity does not delete the PDU session contexts of the UE, but configures the first tunnel information received from the target SMF entity on the source UPF.

S610b. The target SMF entity and a target UPF entity exchange a session management message through the N4 interface.

Specifically, the target SMF entity may update the received PDU session contexts, and after updating the PDU session contexts of the UE, may configure, based on an updated PDU session context, related parameter information (for example, TFTs) on the target UPF entity (equivalent to a second UPF entity) that is managed by the target SMF entity and that provides a session service for the UE.

Optionally, if the handover procedure occurs on the UE, and the PDU session requires service continuity, as described in the foregoing embodiment of this application, the target SMF entity further needs to configure the second tunnel information received from the source SMF entity on the target UPF, to establish a data connection between the source UPF and the target UPF, for example, a data transmission tunnel (Data forwarding tunnel) shown in FIG. 6.

Optionally, when the registration update procedure, the service request procedure, or the handover procedure occurs on the UE, the source SMF entity may delete the PDU session contexts of the UE, and therefore a new IP address needs to be allocated to the UE.

S611. The target SMF entity allocates a new IP address to the UE, and notifies the UE of the new IP address.

Optionally, the target SMF entity may send the new IP address (new IP address) to the UE by using SM signaling (SM message) or a DHCP.

The foregoing procedure is established based on the fact that there is a communications interface through which the source SMF entity may directly communicate with the target SMF entity. When there is no direct interface between the source SMF entity and the target SMF entity, signaling exchanged between the source SMF entity and the target SMF entity may be forwarded by an intermediate device, for example, may be routed and forwarded by the AMF entity. This should be easily understood by a person skilled in the art, and details are not described in this application.

In some embodiments of the present invention, the source SMF entity determines, based on status information, to select an SMF entity for the UE, and sends the indication message to the AMF entity, and after receiving the indication message, the AMF entity selects the target SMF entity for the UE, and then may send address information of the source SMF entity and the identifier of the UE to the selected target SMF entity, so that the target SMF entity may obtain the PDU session contexts of the UE from the source SMF entity based on the address information of the source SMF entity and the identifier of the UE.

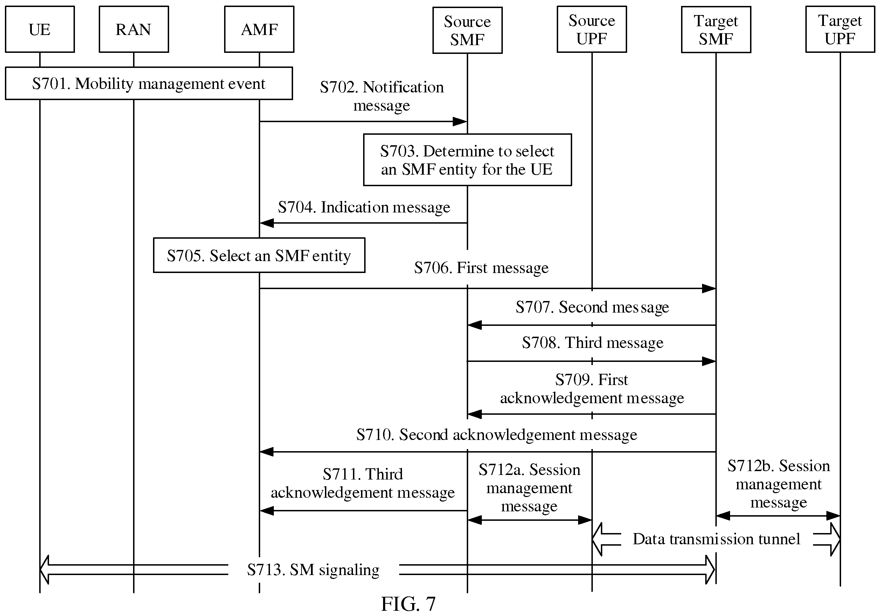

FIG. 7 is a schematic signaling flowchart of a communication method in actual application according to some other embodiments of the present invention.

S701. A signaling procedure of a mobility management event occurs between UE, an access network (RAN), and an AMF entity.

The mobility management event (MM event) may include a registration update procedure, a handover procedure, a service request procedure, or the like.

S702. The AMF entity sends a notification message to a source SMF entity.

The notification message is a notification message used to notify the mobility management event (for example, the notification message is a UE MM event notification).

In an example, the AMF notifies a corresponding SMF (the source SMF entity) of the mobility management event.

Optionally, the notification message may carry location information (UE location) of the UE.

Optionally, the notification message may further carry a UE ID.

S703. The source SMF entity determines to select an SMF entity for the UE.

In an example, after receiving a notification from the AMF entity, the source SMF entity determines, based on a UE location, SMF load, an SMF serving area, UPF overload, a PDU session SSC mode, and the like, whether to select an SMF entity for the UE.

S704. The source SMF entity sends an indication message to the AMF entity.

The indication message is used to instruct the AMF entity to select an SMF entity.

Optionally, the indication message may carry SMF selection indication information.

Optionally, the indication message may further carry an ID (UE ID) of the UE.

Optionally, the indication message may further carry address information of the source SMF entity.

Optionally, the indication message may be specifically in a form of an SMF relocation request.

S705. The AMF entity selects a target SMF entity for the UE after receiving the indication message from the SMF entity.

S706. The AMF entity sends a first message to the target SMF entity after selecting the target SMF entity for the UE.

The first message may carry an address of the source SMF entity and the identifier of the UE.

Optionally, the first message may be specifically in a form of a forward SM relocation request.

S707. The target SMF entity sends a second message to the source SMF entity based on an address of the source SMF entity and an identifier of the UE after receiving the first message.

The indication message is used to obtain PDU session contexts of the UE on the source SMF entity.

Optionally, the second message may carry the ID of the UE.

Optionally, the second message may be specifically in a form of a session context request.

S708. The source SMF entity sends a third message to the target SMF entity after receiving the second message.

The third message may carry the PDU session contexts of the UE, so as to transfer the PDU session contexts of the UE to the target SMF entity.

Optionally, the third message may be specifically in a form of a session context response.

Optionally, similar to FIG. 6, when a handover occurs on the UE, the source SMF entity and the target SMF entity further need to exchange a tunnel parameter used to establish a data channel between a source UPF entity and a target UPF entity.

Optionally, the source SMF entity may generate first tunnel information used to establish the data channel between the source UPF entity and the target UPF entity, and send the first tunnel information when sending the PDU session contexts of the UE to the target SMF entity. In other words, the third message may further carry the first tunnel information.

S709. The target SMF entity sends a first acknowledgement message to the source SMF entity after receiving the third message.

Optionally, after receiving the second message, the target SMF entity may generate second tunnel information used to establish the data channel between the source UPF entity and the target UPF entity, and may add the second tunnel information to the first acknowledgement message.

Optionally, the first acknowledgement message may be specifically in a form of a session context response Ack.

Optionally, the target SMF entity may alternatively send the second tunnel information together with the second message to the source SMF entity by adding the second tunnel information to the second message in S707. In this case, S709 may be omitted.

S710. The target SMF entity feeds back a second acknowledgement message to the AMF entity after receiving the third message.

Optionally, the second acknowledgement message may be specifically in a form of a forward SM relocation request Ack.

S711. The AMF entity feeds back a third acknowledgement message to the source SMF entity after receiving the second acknowledgement message fed back by the target SMF entity. It should be noted that step S711 is optional.

Optionally, the third acknowledgement message may be specifically in a form of an SM relocation request Ack.

S712a. The source SMF entity and a source UPF entity exchange a session management message through an N4 interface. For details, refer to description in FIG. 6. Details are not described herein in this application.

S712b. The target SMF entity and a target UPF entity exchange a session management message through the N4 interface. For details, refer to description in FIG. 6. Details are not described herein in this application.

Optionally, when the registration update procedure, the service request procedure, or the handover procedure occurs on the UE, the source SMF entity may delete the PDU session contexts of the UE, and therefore a new IP address needs to be allocated to the UE.

S713. The target SMF entity allocates a new IP address to the UE, and notifies the UE of the new IP address.

Optionally, the target SMF entity may send the new IP address to the UE by using SM signaling or a DHCP.

Similarly, the foregoing procedure is established based on the fact that there is a communications interface through which the source SMF entity may directly communicate with the target SMF entity. When there is no direct interface between the source SMF entity and the target SMF entity, signaling exchanged between the source SMF entity and the target SMF entity may be forwarded by an intermediate device. Details are not described in this application.

In some embodiments of the present invention, after determining, based on status information, to select an SMF entity for the UE, the source SMF entity sends the indication message to the AMF entity, and may directly send the PDU session contexts of the UE to the AMF entity, and after receiving the indication message, the AMF entity selects the target SMF entity for the UE, and then may send the PDU session contexts of the UE to the selected target SMF entity.

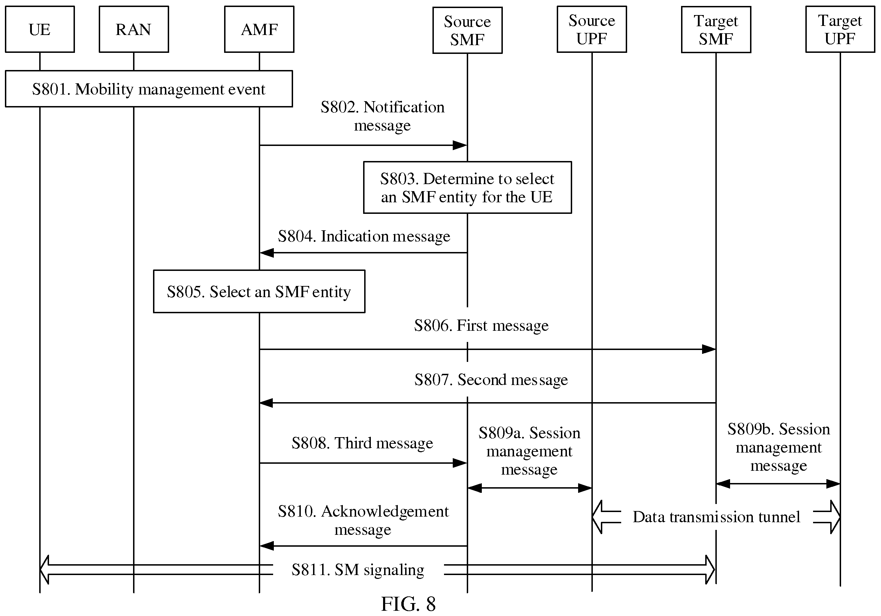

FIG. 8 is a schematic signaling flowchart of a communication method in actual application according to some other embodiments of the present invention.

S801. A signaling procedure of a mobility management event occurs between UE, an access network (RAN), and an AMF entity.

The mobility management event (MM event) may include a registration update procedure, a handover procedure, a service request procedure, or the like.

S802. The AMF entity sends a notification message to a source SMF entity.

The notification message is a notification message used to notify the mobility management event (for example, the notification message is a UE MM event notification).

In an example, the AMF notifies a corresponding SMF (the source SMF entity) of the mobility management event.

Optionally, the notification message may carry location information of the UE.

Optionally, the notification message may further carry a UE ID.

S803. The source SMF entity determines to select an SMF entity for the UE.

In an example, the source SMF entity determines, based on a UE location, SMF load, an SMF serving area, UPF overload, a PDU session SSC mode, and the like, whether to select an SMF entity for the UE.

S804. The source SMF entity sends an indication message to the AMF entity.

The indication message is used to instruct the AMF entity to select an SMF entity.

Optionally, the indication message may carry SMF selection indication information, and the SMF selection indication information is used to instruct to select an SMF entity.

Optionally, the indication message may carry PDU session contexts of the UE.

Similar to the foregoing description, if the handover procedure occurs on the UE, the source SMF entity and a target SMF entity further need to exchange a tunnel parameter used to establish a data channel between a source UPF entity and a target UPF entity.

Optionally, the source SMF entity may generate first tunnel information used to establish the data channel between the source UPF entity and the target UPF entity, and add the first tunnel information to the indication message.

Optionally, the indication message may be specifically in a form of an SMF relocation request.

S805. The AMF entity selects a target SMF entity for the UE after receiving the indication message from the SMF.

S806. The AMF entity sends a first message to the target SMF entity after selecting the target SMF entity.

The first message may carry the PDU session context of the UE.

Optionally, in a handover scenario, the first message may further carry the first tunnel information.

Optionally, the first message may be specifically in a form of a forward SM relocation request.

S807. The target SMF entity feeds back a second message to the AMF entity after receiving the first message.

Optionally, in the handover scenario, after receiving the first message, the target SMF entity may generate second tunnel information used to establish the data channel between the source UPF entity and the target UPF entity, and may add the second tunnel information to the second message.

Optionally, the second message may be specifically in a form of a forward SM relocation response.

S808. The AMF entity sends a third message to the target SMF entity.

The third message may carry the second tunnel information.

Optionally, the first message may be specifically in a form of an SM relocation response.

S809a. The source SMF entity and a source UPF entity exchange a session management message through an N4 interface. For details, refer to description in FIG. 6. Details are not described herein in this application.

S809b. The target SMF entity and a target UPF entity exchange a session management message through the N4 interface. For details, refer to description in FIG. 6. Details are not described herein in this application.

S810. The source SMF entity sends an acknowledgement message to the AMF entity.

Optionally, the acknowledgement message may be specifically in a form of an SM relocation response Ack.

Optionally, when the registration update procedure, the service request procedure, or the handover procedure occurs on the UE, the source SMF entity may delete the PDU session contexts of the UE, and therefore a new IP address needs to be allocated to the UE.

S811. The target SMF entity allocates a new IP address to the UE, and notifies the UE of the new IP address.

Optionally, the target SMF entity may send the new IP address (new IP address) to the UE by using SM signaling (SM message) or a DHCP.

In conclusion, in the foregoing embodiments of the present invention, if determining, based on the status information, that an SMF entity needs to be selected for the UE, the first SMF entity sends the indication message to the AMF entity, to instruct the AMF entity to select an SMF entity for the UE. It can be learned that in the foregoing manner, when determining to select an SMF entity for the UE, the first SMF entity instructs the AMF entity to select an SMF entity for the UE, thereby implementing SMF entity selection. In addition, in some embodiments of the present invention, the PDU session contexts of the UE are transferred from the first SMF entity to the second SMF entity, so that the PDU session service continuity can be ensured in a handover process of the UE, and the second SMF entity does not need to establish a new PDU session for the UE.

Based on a same inventive concept, this application further provides a communications apparatus. Function modules in the apparatus may be specifically implemented by hardware, software, or a combination of software and hardware. The apparatus may be deployed on a first SMF entity, for example, may be deployed on the SMF entity 2032 or the SMF entity 2035 shown in FIG. 2.

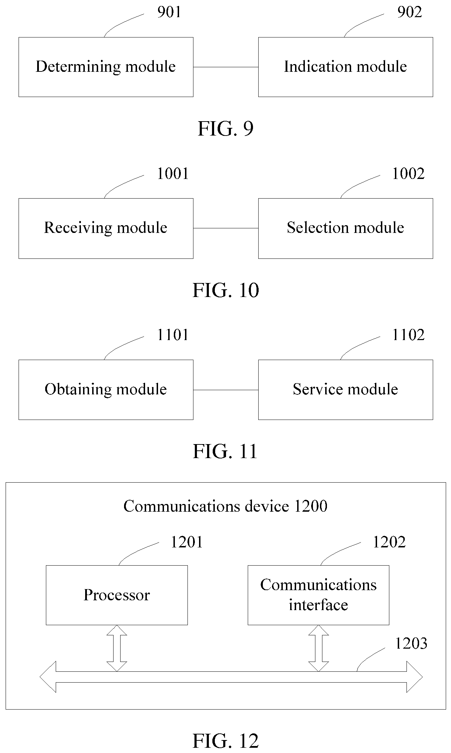

FIG. 9 is a schematic structural diagram of a communications apparatus according to some embodiments of the present invention.

As shown in FIG. 9, the apparatus includes:
a determining module 901, configured to determine, based on status information, to select an SMF entity for UE; and
an indication module 902, configured to send an indication message to an AMF entity, where the indication message is used to instruct the AMF entity to select an SMF entity for the UE.

Optionally, the apparatus further includes a first transceiver module, configured to: receive address information that is of a second SMF entity and that is sent by the AMF entity, and send an identifier of the UE and a PDU session context of the UE to the second SMF entity based on the address information of the second SMF entity, where the second SMF entity is an SMF entity selected by the AMF entity for the UE; or
receive a request message sent by the second SMF entity, and send a response message to the second SMF entity based on the request message, where the response message includes a PDU session context of the UE; or
send a PDU session context of the UE to the AMF entity.

Optionally, the apparatus further includes a first receiving module, configured to receive a notification message from the AMF entity, where the notification message is used to notify that a handover event or a registration update event occurs on the UE.

Optionally, the apparatus further includes a second transceiver module, configured to: send first tunnel information to the second SMF entity, and receive second tunnel information sent by the second SMF entity, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

Optionally, the apparatus further includes a second receiving module, configured to receive a PDU session establishment request message from the AMF entity, where the PDU session establishment request message is used to request to establish a PDU session for the UE.

Optionally, the status information includes at least one type of the following: location information of the UE, a serving area of the first SMF entity, load of the first SMF entity, and load of a UPF entity managed by the first SMF entity.

Optionally, the determining module 901 is specifically configured to:
when a location of the UE falls outside the serving area of the first SMF entity, determine to select an SMF entity for the UE; or
when the first SMF entity is overloaded, determine to select an SMF entity for the UE; or
when the UPF entity managed by the first SMF entity is overloaded, determine to select an SMF entity for the UE; or
when a location of the UE falls outside the serving area of the first SMF entity, and a service and session continuity SCC mode of a PDU session of the UE indicates that the PDU session of the UE requires maintenance of service continuity, determine to select an SMF entity for the UE.

Specifically, a problem-resolving principle of the apparatus provided in the foregoing embodiment of the present invention is similar to that of the method embodiment on a first SMF entity side provided in the foregoing embodiment of the present invention. Therefore, mutual reference may be made to a specific implementation of the apparatus provided in the foregoing embodiment of the present invention and an implementation of the method on the first SMF side provided in the foregoing embodiment of the present invention, and no repeated description is provided.

Based on a same inventive concept, this application further provides a communications apparatus. Function modules in the apparatus may be specifically implemented by hardware, software, or a combination of software and hardware. The apparatus may be deployed on an AMF entity, for example, may be deployed on the AMF entity 2031 shown in FIG. 2.

FIG. 10 is a schematic structural diagram of a communications apparatus according to some embodiments of the present invention.

As shown in FIG. 10, the apparatus includes:
a receiving module 1001, configured to receive an indication message from a first SMF entity, where the indication message is used to instruct the AMF entity to select an SMF entity for UE; and
a selection module 1002, configured to select a second SMF entity for the UE based on the indication message.

Optionally, the apparatus further includes a first transceiver module, configured to:
send address information of the second SMF entity to the first SMF entity; or
send an identifier of the UE and address information of the first SMF entity to the second SMF entity; or
receive a protocol data unit PDU session context of the UE from the first SMF entity, and send the PDU session context of the UE to the second SMF entity.

Optionally, the apparatus further includes a sending module, configured to: when detecting that a handover event or a registration update event occurs on the UE, send a notification message to the first SMF entity, where the notification message is used to notify that the handover event or the registration update event occurs on the UE.

Optionally, the apparatus further includes a second transceiver module, configured to:
receive a PDU session establishment request message from the UE; and send the PDU session establishment request message to the first SMF entity.

Optionally, the selection module 1002 is specifically configured to select the second SMF entity for the UE based on at least one type of location information of the UE, a data network name selected DNN of the UE, session management-network slice selection assistance information S-NSSAI of the UE, subscription information of the UE, a local operator policy, a serving area of a candidate SMF entity, and a load condition of the candidate SMF entity.

Specifically, a problem-resolving principle of the apparatus provided in the foregoing embodiment of the present invention is similar to that of the method embodiment on an AMF entity side provided in the foregoing embodiment of the present invention. Therefore, mutual reference may be made to a specific implementation of the apparatus provided in the foregoing embodiment of the present invention and an implementation of the method on the AMF side provided in the foregoing embodiment of the present invention, and no repeated description is provided.

Based on a same inventive concept, this application further provides a communications apparatus. Function modules in the apparatus may be specifically implemented by hardware, software, or a combination of software and hardware. The apparatus may be deployed on a second SMF entity, for example, may be deployed on the SMF entity 2032 or the SMF entity 2035 shown in FIG. 2.

FIG. 11 is a schematic structural diagram of a communications apparatus according to some embodiments of the present invention.

As shown in FIG. 11, the apparatus includes:
an obtaining module 1101, configured to obtain a PDU session context of user equipment UE on a first SMF entity; and
a service module 1102, configured to provide a PDU session service for the UE based on the PDU session context of the UE.

Optionally, the obtaining module 1101 is specifically configured to:
receive the PDU session context of the UE from the first SMF entity; or
receive an identifier of the UE and address information of the first SMF entity that are sent by an AMF entity, send a request message to the first SMF entity based on the identifier of the UE and the address information of the first SMF entity, where the request message is used to obtain the PDU session context of the UE, and receive a response message sent by the first SMF entity, where the response message includes the PDU session context of the UE; or
receive the PDU session context of the UE from the AMF entity.

Optionally, the apparatus further includes: a transceiver module, configured to receive first tunnel information from the first SMF entity, and a sending module, configured to send second tunnel information to the first SMF entity, where
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

Optionally, the apparatus further includes an allocation module, configured to: allocate an Internet IP address to the UE, and send the IP address to the UE by using session management signaling.

Specifically, a problem-resolving principle of the apparatus provided in the foregoing embodiment of the present invention is similar to that of the method embodiment on a second SMF entity side provided in the foregoing embodiment of the present invention. Therefore, mutual reference may be made to a specific implementation of the apparatus provided in the foregoing embodiment of the present invention and an implementation of the method on the second SMF side provided in the foregoing embodiment of the present invention, and no repeated description is provided.

Module division in this embodiment of this application is an example, is merely logical function division, and may be other division in actual implementation. In addition, function modules in the embodiments of this application may be integrated into one processor, or each of the modules may exist alone physically, or two or more modules are integrated into one module. The integrated module may be implemented in a form of hardware, or may be implemented in a form of a software function module.

Based on a same inventive concept, this application further provides a communications device. A first SMF entity is deployed on the communications device. FIG. 12 is a schematic structural diagram of a communications device according to some embodiments of the present invention.

As shown in FIG. 12, the communications device 1200 may include a processor 1201. The processor 1201 may be a central processing module (central processing unit, CPU), a digital processing module, or the like. The communications device 1200 may further include a communications interface 1202. The processor 1201 is configured to: determine, based on status information, to select an SMF entity for UE, and send an indication message to an AMF entity through the communications interface 1202, where the indication message is used to instruct the AMF entity to select an SMF entity for the UE. The processor 1201 and the communications interface 1202 are specifically configured to perform the method on a first SMF entity side provided in the foregoing embodiment of the present invention. Details are not described herein again in this application.

Although not shown in the figure, the communications device 1200 may further include a memory, configured to store a program executed by the processor 1201. The memory may be a nonvolatile memory such as a hard disk (hard disk drive, HDD) or a solid state drive (solid-state drive, SSD), or may be a volatile memory (volatile memory) such as a random access memory (random-access memory, RAM). The memory is any other medium that can carry or store expected program code in a form of an instruction or a data structure and that can be accessed by a computer, but is not limited thereto.

In this embodiment of this application, a specific connection medium between the processor 1201 and the communications interface 1202 is not limited. In this embodiment of this application, in FIG. 12, the processor 1201 is connected to the communications interface 1202 by using a bus. The bus is indicated by using a hollow line with a double-headed arrow in FIG. 12, but it does not indicate that there is only one bus or one type of bus. A connection manner of other components is merely described by using an example, and is not limited thereto. The bus may be classified into an address bus, a data bus, a control bus, and the like.

An embodiment of the present invention further provides a readable storage medium, configured to store a software instruction used to perform operations that need to be performed by the processor. The software instruction includes a program used to perform the operations that need to be performed by the processor.

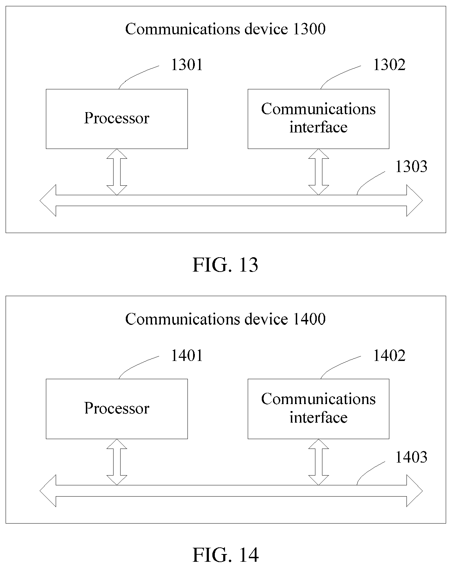

Based on a same inventive concept, this application further provides a communications device. An AMF entity is deployed on the communications device. FIG. 13 is a schematic structural diagram of a communications device according to some embodiments of the present invention.

As shown in FIG. 13, the communications device 1300 may include a processor 1301. The processor 1301 may be a central processing module, a digital processing module, or the like. The communications device 1300 may further include a communications interface 1302. The communications interface 1302 is configured to receive an indication message from a first SMF entity, where the indication message is used to instruct the AMF entity to select an SMF entity for UE. The processor 1301 is configured to select a second SMF entity for the UE based on the indication message. The processor 1301 and the communications interface 1302 are specifically configured to perform the method on an AMF entity side provided in the foregoing embodiment of the present invention. Details are not described herein again in this application.

Although not shown in the figure, the communications device 1300 may further include a memory, configured to store a program executed by the processor 1301. The memory may be a nonvolatile memory such as a hard disk or a solid state drive, or may be a volatile memory such as a random access memory. The memory is any other medium that can carry or store expected program code in a form of an instruction or a data structure and that can be accessed by a computer, but is not limited thereto.

In this embodiment of this application, a specific connection medium between the processor 1301 and the communications interface 1302 is not limited. In this embodiment of this application, in FIG. 13, the processor 1301 is connected to the communications interface 1302 by using a bus. The bus is indicated by using a hollow line with a double-headed arrow in FIG. 13, but it does not indicate that there is only one bus or one type of bus. A connection manner of other components is merely described by using an example, and is not limited thereto. The bus may be classified into an address bus, a data bus, a control bus, and the like.

An embodiment of the present invention further provides a readable storage medium, configured to store a software instruction used to perform operations that need to be performed by the processor. The software instruction includes a program used to perform the operations that need to be performed by the processor.

Based on a same inventive concept, this application further provides a communications device. A second SMF entity is deployed on the communications device. FIG. 14 is a schematic structural diagram of a communications device according to some embodiments of the present invention.

As shown in FIG. 14, the communications device 1400 may include a processor 1401. The processor 1401 may be a central processing module, a digital processing module, or the like. The communications device 1400 may further include a communications interface 1402. The processor 1401 is configured to: obtain a PDU session context of UE on a first SMF entity through the communications interface 1402, and provide a PDU session service for the UE based on the PDU session context of the UE. The processor 1401 and the communications interface 1402 are specifically configured to perform the method on a second SMF entity side provided in the foregoing embodiment of the present invention. Details are not described herein again in this application.

Although not shown in the figure, the communications device 1400 may further include a memory, configured to store a program executed by the processor 1401. The memory may be a nonvolatile memory such as a hard disk or a solid state drive, or may be a volatile memory such as a random access memory. The memory is any other medium that can carry or store expected program code in a form of an instruction or a data structure and that can be accessed by a computer, but is not limited thereto.

In this embodiment of this application, a specific connection medium between the processor 1401 and the communications interface 1402 is not limited. In this embodiment of this application, in FIG. 14, the processor 1401 is connected to the communications interface 1402 by using a bus. The bus is indicated by using a hollow line with a double-headed arrow in FIG. 14, but it does not indicate that there is only one bus or one type of bus. A connection manner of other components is merely described by using an example, and is not limited thereto. The bus may be classified into an address bus, a data bus, a control bus, and the like.

An embodiment of the present invention further provides a readable storage medium, configured to store a software instruction used to perform operations that need to be performed by the processor. The software instruction includes a program used to perform the operations that need to be performed by the processor.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
determining, by a first SMF entity based on status information, to select an SMF entity for user equipment UE; and
sending, by the first SMF entity, an indication message to an access and mobility management function AMF entity, wherein the indication message is used to instruct the AMF entity to select an SMF entity for the UE.

2. The method according to claim 1, wherein after the sending, by the first SMF entity, an indication message to an AMF entity, the method further comprises:
receiving, by the first SMF entity, address information that is of a second SMF entity and that is sent by the AMF entity, and sending an identifier of the UE and a PDU session context of the UE to the second SMF entity based on the address information of the second SMF entity, wherein the second SMF entity is an SMF entity selected by the AMF entity for the UE; or
receiving, by the first SMF entity, a request message sent by the second SMF entity, and sending a response message to the second SMF entity based on the request message, wherein the response message comprises a PDU session context of the UE; or
sending, by the first SMF entity, a PDU session context of the UE to the AMF entity.

3. The method according to claim 1 or 2, wherein before the determining, by a first SMF entity based on status information, to select an SMF entity for UE, the method further comprises:
receiving, by the first SMF entity, a notification message from the AMF entity, wherein the notification message is used to notify that a handover event or a registration update event occurs on the UE.

4. The method according to claim 3, wherein the notification message is used to notify that the handover event occurs on the UE, and the method further comprises:
sending, by the first SMF entity, first tunnel information to the second SMF entity, and receiving second tunnel information sent by the second SMF entity, wherein
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

5. The method according to claim 1 or 2, wherein before the determining, by a first SMF entity based on status information, to select an SMF entity for UE, the method further comprises:
receiving, by the first SMF entity, a PDU session establishment request message from the AMF entity, wherein the PDU session establishment request message is used to request to establish a PDU session for the UE.

6. The method according to any one of claims 1 to 5, wherein the status information comprises at least one type of the following: location information of the UE, a serving area of the first SMF entity, load of the first SMF entity, and load of a UPF entity managed by the first SMF entity.

7. The method according to any one of claims 1 to 6, wherein the determining, by a first SMF entity based on status information, to select an SMF entity for UE comprises:
if a location of the UE falls outside the serving area of the first SMF entity, determining, by the first SMF entity, to select an SMF entity for the UE; or
if the first SMF entity is overloaded, determining, by the first SMF entity, to select an SMF entity for the UE; or
if the UPF entity managed by the first SMF entity is overloaded, determining, by the first SMF entity, to select an SMF entity for the UE; or
if a location of the UE falls outside the serving area of the first SMF entity, and a service and session continuity SCC mode of a PDU session of the UE indicates that the PDU session of the UE requires maintenance of service continuity, determining, by the first SMF entity, to select an SMF entity for the UE.

8. A communication method, wherein the method comprises:
receiving, by an access and mobility management function AMF entity, an indication message from a first SMF entity, wherein the indication message is used to instruct the AMF entity to select an SMF entity for user equipment UE; and
selecting, by the AMF entity, a second SMF entity for the UE based on the indication message.

9. The method according to claim 8, wherein the method further comprises:
sending, by the AMF entity, address information of the second SMF entity to the first SMF entity; or
sending, by the AMF entity, an identifier of the UE and address information of the first SMF entity to the second SMF entity; or
receiving, by the AMF entity, a protocol data unit PDU session context of the UE from the first SMF entity, and sending the PDU session context of the UE to the second SMF entity.

10. The method according to claim 8 or 9, wherein before the receiving, by an AMF entity, an indication message from a first SMF entity, the method further comprises:
if detecting that a handover event or a registration update event occurs on the UE, sending, by the AMF entity, a notification message to the first SMF entity, wherein the notification message is used to notify that the handover event or the registration update event occurs on the UE.

11. The method according to claim 8 or 9, wherein before the receiving, by an AMF entity, an indication message from a first SMF entity, the method further comprises:
receiving, by the AMF entity, a PDU session establishment request message from the UE; and
sending, by the AMF entity, the PDU session establishment request message to the first SMF entity.

12. The method according to any one of claims 8 to 11, wherein the selecting, by the AMF entity, a second SMF entity for the UE based on the indication message comprises:
selecting, by the AMF entity, the second SMF entity for the UE based on at least one type of location information of the UE, a data network name selected DNN of the UE, session management-network slice selection assistance information S-NSSAI of the UE, subscription information of the UE, a local operator policy, a serving area of a candidate SMF entity, and a load condition of the candidate SMF entity.

13. A communication method, wherein the method comprises:
obtaining, by a second SMF entity, a protocol data unit PDU session context of user equipment UE on a first SMF entity; and
providing, by the second SMF entity, a PDU session service for the UE based on the PDU session context of the UE.

14. The method according to claim 13, wherein the obtaining, by a second SMF entity, a PDU session context of UE on a first SMF entity comprises:
receiving, by the second SMF entity, the PDU session context of the UE from the first SMF entity; or
receiving, by the second SMF entity, an identifier of the UE and address information of the first SMF entity that are sent by an access and mobility management function AMF entity, sending a request message to the first SMF entity based on the identifier of the UE and the address information of the first SMF entity, wherein the request message is used to obtain the PDU session context of the UE, and receiving a response message sent by the first SMF entity, wherein the response message comprises the PDU session context of the UE; or
receiving, by the second SMF entity, the PDU session context of the UE from the AMF entity.

15. The method according to claim 13 or 14, wherein the method further comprises:
receiving, by the second SMF entity, first tunnel information from the first SMF entity, and sending second tunnel information to the first SMF entity, wherein
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

16. The method according to any one of claims 13 to 15, further comprising:
allocating, by the second SMF entity, an Internet IP address to the UE, and sending the IP address to the UE by using session management signaling.

17. A communications device, wherein a first session management function SMF entity is deployed on the communications device, and the device comprises:
a communications interface and a processor, wherein
the processor is configured to: determine, based on status information, to select an SMF entity for user equipment UE, and send an indication message to an access and mobility management function AMF entity through the communications interface, wherein the indication message is used to instruct the AMF entity to select an SMF entity for the UE.

18. The device according to claim 17, wherein the processor is further configured to:
receive, through the communications interface, address information that is of a second SMF entity and that is sent by the AMF entity, and send an identifier of the UE and a PDU session context of the UE to the second SMF entity through the communications interface based on the address information of the second SMF entity, wherein the second SMF entity is an SMF entity selected by the AMF entity for the UE; or
receive, through the communications interface, a request message sent by the second SMF entity, and send a response message to the second SMF entity through the communications interface based on the request message, wherein the response message comprises a PDU session context of the UE; or
send a PDU session context of the UE to the AMF entity through the communications interface.

19. The device according to claim 17 or 18, wherein the processor is further configured to:
receive a notification message from the AMF entity through the communications interface, wherein the notification message is used to notify that a handover event or a registration update event occurs on the UE.

20. The device according to claim 19, wherein the notification message is used to notify that the handover event occurs on the UE, and the processor is further configured to:
send first tunnel information to the second SMF entity through the communications interface, and receive, through the communications interface, second tunnel information sent by the second SMF entity, wherein
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

21. The device according to claim 17 or 18, wherein the processor is further configured to:
receive a PDU session establishment request message from the AMF entity through the communications interface, wherein the PDU session establishment request message is used to request to establish a PDU session for the UE.

22. The device according to any one of claims 17 to 21, wherein the status information comprises at least one type of the following: location information of the UE, a serving area of the first SMF entity, load of the first SMF entity, and load of a UPF entity managed by the first SMF entity.

23. The device according to any one of claims 17 to 22, wherein the processor is specifically configured to:
if a location of the UE falls outside the serving area of the first SMF entity, determine to select an SMF entity for the UE; or
if the first SMF entity is overloaded, determine to select an SMF entity for the UE; or
if the UPF entity managed by the first SMF entity is overloaded, determine to select an SMF entity for the UE; or
if a location of the UE falls outside the serving area of the first SMF entity, and a service and session continuity SCC mode of a PDU session of the UE indicates that the PDU session of the UE requires maintenance of service continuity, determine to select an SMF entity for the UE.

24. A communications device, wherein a mobility management function AMF entity is deployed on the communications device, and the device comprises:
a communications interface and a processor, wherein
the communications interface is configured to receive an indication message from a first SMF entity, wherein the indication message is used to instruct the AMF entity to select an SMF entity for user equipment UE; and
the processor is configured to select a second SMF entity for the UE based on the indication message.

25. The device according to claim 24, wherein the processor is further configured to:
send address information of the second SMF entity to the first SMF entity through the communications interface; or
send an identifier of the UE and address information of the first SMF entity to the second SMF entity through the communications interface; or
receive a protocol data unit PDU session context of the UE from the first SMF entity through the communications interface, and send the PDU session context of the UE to the second SMF entity through the communications interface.

26. The device according to claim 24 or 25, wherein the processor is further configured to:
if detecting that a handover event or a registration update event occurs on the UE, send a notification message to the first SMF entity through the communications interface, wherein the notification message is used to notify that the handover event or the registration update event occurs on the UE.

27. The device according to claim 24 or 25, wherein the processor is further configured to:
receive a PDU session establishment request message from the UE through the communications interface; and
send the PDU session establishment request message to the first SMF entity through the communications interface.

28. The device according to any one of claims 24 to 27, wherein the processor is specifically configured to:
select the second SMF entity for the UE based on at least one type of location information of the UE, a data network name selected DNN of the UE, session management-network slice selection assistance information S-NSSAI of the UE, subscription information of the UE, a local operator policy, a serving area of a candidate SMF entity, and a load condition of the candidate SMF entity.

29. A communications device, wherein a second session management function SMF entity is deployed on the communications device, and the device comprises:
a communications interface and a processor, wherein
the processor is configured to: obtain a protocol data unit PDU session context of user equipment UE on a first SMF entity through the communications interface, and provide a PDU session service for the UE based on the PDU session context of the UE.

30. The device according to claim 29, wherein the processor is specifically configured to:
receive the PDU session context of the UE from the first SMF entity through the communications interface; or
receive, through the communications interface, an identifier of the UE and address information of the first SMF entity that are sent by an access and mobility management function AMF entity, send a request message to the first SMF entity through the communications interface based on the identifier of the UE and the address information of the first SMF entity, wherein the request message is used to obtain the PDU session context of the UE, and receive, through the communications interface, a response message sent by the first SMF entity, wherein the response message comprises the PDU session context of the UE; or
receive the PDU session context of the UE from the AMF entity through the communications interface.

31. The device according to claim 29 or 30, wherein the processor is further configured to:
receive first tunnel information from the first SMF entity through the communications interface, and send second tunnel information to the first SMF entity through the communications interface, wherein
the first tunnel information and the second tunnel information are used to establish a data connection between a first user plane function UPF entity and a second UPF entity for the UE, the first UPF entity is a UPF entity that is managed by the first SMF entity and that provides a PDU session service for the UE, and the second UPF entity is a UPF entity that is managed by the second SMF entity and that provides a PDU session service for the UE.

32. The device according to any one of claims 29 to 31, wherein the processor is further configured to:
allocate an Internet IP address to the UE, and send the IP address to the UE through the transceiver by using session management signaling.
